# FASCICULE DE BREVET EUROPEEN

(11) **EP 3 227 595 B1**
(45) Date de publication et mention de la délivrance du brevet: **09.01.2019**
(21) Numéro de dépôt: 15813283.7
(22) Date de dépôt: 30.11.2015
(51) Int. Cl.: F16L 37/35, F16L 37/56, F16L 37/34

(54) **RACCORD FLUIDIQUE COAXIAL**
KOAXIALFLUIDVERBINDER
COAXIAL FLUID CONNECTOR

(30) Priorité: 01.12.2014 FR 1461715
(43) Date de publication de la demande: 11.10.2017
(73) Titulaire: Staubli Faverges, 74210 Faverges (FR)
(72) Inventeur: TIBERGHIEN, Alain-Christophe, 74320 Sevrier (FR); DURIEUX, Christophe, 73200 Gilly sur Isère (FR); MAYER, Romain, 73400 Héry sur Ugine (FR)
(74) Mandataire: Lavoix
(86) Numéro de dépôt international: PCT/EP2015/078007
(87) Numéro de publication internationale: WO 2016/071536

(56) Documents cités:
- EP-A1- 0 074 991
- EP-A1- 0 853 743
- EP-A1- 1 629 230
- WO-A1-2014/058461
- US-B2- 8 602 056

## Description

L'invention concerne un raccord fluidique coaxial pour connecter des canalisations d'alimentation et de refoulement d'un outil hydraulique vers une pompe hydraulique. En particulier, l'invention trouve une application dans le domaine des raccords de canalisation pour les appareils de secours.

Lors des opérations de secours sur un lieu d'accident, les équipes d'intervention utilisent des appareils de désincarcération hydraulique qui sont reliés à une centrale de distribution par des tuyaux raccordés bout à bout. Ces tuyaux alimentent les appareils en huile sous pression depuis une pompe hydraulique et conduisent également l'huile refoulée à basse pression vers un réservoir de la pompe. En pratique, la connexion du raccord s'effectue sous pression, c'est-à-dire qu'il existe une pression de service dans les conduites d'alimentation et de refoulement.

EP-B-1 629 230 divulgue un raccord pour des conduites à structure coaxiale, c'est-à-dire qui définissent un passage interne de fluide et un passage externe disposé autour du passage interne. Ce raccord comprend un élément mâle et un élément femelle complémentaires. Les éléments mâle et femelle comportent chacun un corps, formé par deux parties coaxiales, qui définissent un passage interne et un passage externe de fluide. Lors de l'accouplement de l'élément mâle avec l'élément femelle, les passages interne et externe de l'élément mâle sont respectivement mis en communication avec les passages interne et externe de l'élément femelle. L'élément mâle et l'élément femelle comportent chacun un tiroir mobile axialement à l'intérieur de leur passage externe respectif. Les tiroirs mâle et femelle obturent le passage externe des éléments mâle et femelle en position désaccouplée. Lors de l'accouplement, les tiroirs mâle et femelle sont respectivement poussés par le corps femelle et le corps mâle et ne s'opposent plus à la circulation du fluide dans le passage externe du raccord.

Afin d'assurer un contact étanche en position désaccouplée, le tiroir femelle comporte des joints d'étanchéité interne et externe. Ces joints sont en contact étanche avec les parties coaxiales interne et externe du corps femelle en position désaccouplée. En revanche, le joint radial externe est directement exposé au fluide circulant dans le passage externe en position accouplée du raccord. Le même problème se pose avec le corps mâle, qui comporte également des joints d'étanchéité interne et externe prévus pour coopérer respectivement avec un noyau fixe et le tiroir mâle en position désaccouplée, de manière à obturer le passage externe de l'élément mâle. En effet, en position accouplée du raccord, le joint extérieur du corps mâle se trouve directement exposé au fluide circulant dans le passage externe.

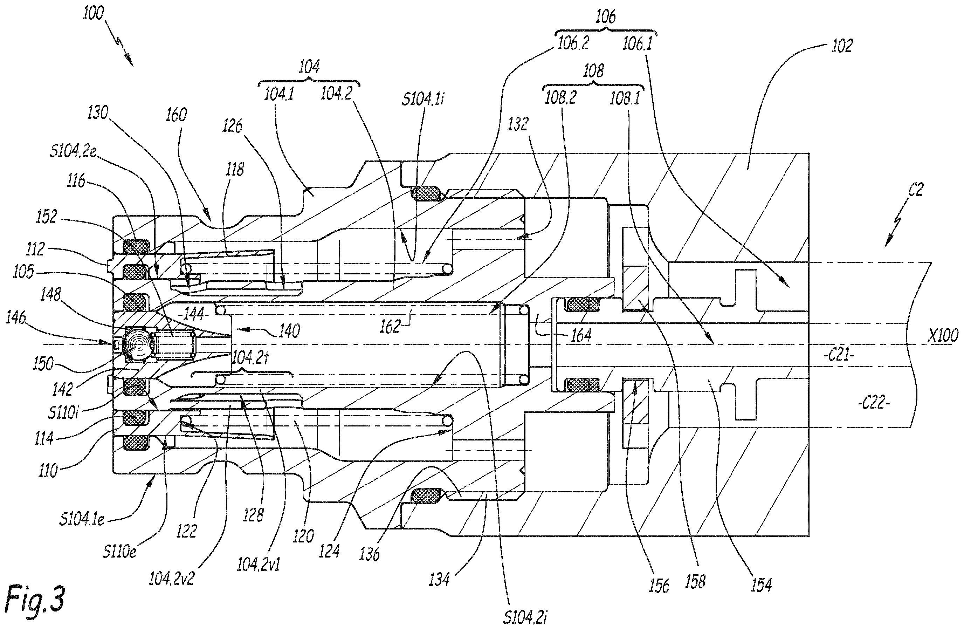

EP-B-0 074 991 divulgue un raccord présentant les mêmes inconvénients. Ce raccord comporte un élément mâle ayant un tube extérieur, à l'intérieur duquel est disposé un noyau creux. Le noyau creux délimite un passage interne de fluide. Un passage externe de fluide est délimité entre le noyau et le tube externe. Un anneau mâle est mobile axialement à l'intérieur du passage externe. Cet anneau comporte un joint d'étanchéité, qui est en contact étanche contre un siège en position désaccouplée du raccord. Lors de l'accouplement, l'anneau est repoussé par un tube intérieur de l'élément femelle, à l'intérieur duquel est défini un passage interne de fluide et autour duquel est défini un passage externe de fluide. Ce tube intérieur femelle comprend également un joint d'étanchéité externe qui coopère avec un siège périphérique de manière à obturer le passage externe femelle en position désaccouplée. En revanche, comme visible à la figure 3, en position accouplée, les joints respectifs de l'anneau mâle et du tube intérieur femelle sont exposés à la circulation de fluide dans le passage externe.

L'exposition des joints d'étanchéité au passage du fluide dans la veine extérieure du raccord entraine une dégradation accélérée des joints, notamment à haut débit et/ou haute pression. Un joint risque d'être expulsé hors de son logement sous la pression du fluide. Cela peut donc entrainer des problèmes d'étanchéité et des problèmes de fermeture une fois le raccord désaccouplé, liés au mauvais repositionnement des joints. Dans le cas de flexibles alimentés en huile sous pression, le déversement d'huile peut provoquer un incendie car l'huile peut s'enflammer sur le lieu de l'accident.

C'est à ces inconvénients qu'entend plus particulièrement remédier l'invention en proposant un raccord fluidique, dans lequel les joints d'étanchéité des éléments mâle et femelle ne sont pas ou sont peu exposés à la circulation du fluide dans le passage externe du raccord en position accouplée.

A cet effet, l'invention concerne un raccord fluidique pour la jonction amovible de deux canalisations, comprenant un élément mâle qui comporte :
- un corps mâle définissant un passage interne et un passage externe, et
- un tiroir mâle, qui est mobile axialement à l'intérieur du passage externe entre une position désaccouplée du raccord, où il obture de manière étanche une embouchure distale du passage externe, et une position accouplée, où il ne s'oppose pas au passage du fluide dans l'embouchure,
et un élément femelle complémentaire qui comporte :
- un corps femelle, comprenant deux parties coaxiales définissant un passage interne et un passage externe, et
- un tiroir femelle, qui est mobile axialement à l'intérieur du passage externe entre une position désaccouplée du raccord, où il obture de manière étanche une embouchure distale du passage externe, et une position accouplée, où il ne s'oppose pas au passage du fluide dans l'embouchure, le tiroir mâle et le tiroir femelle étant respectivement poussés par le corps femelle et par le corps mâle lors de l'accouplement.
Conformément à l'invention :
- le corps mâle délimite un passage de liaison entre le passage externe de l'élément femelle et le passage externe de l'élément mâle lors de l'accouplement des éléments, ce passage de liaison s'étendant entre au moins une ouverture distale et au moins une ouverture proximale, qui sont délimitées dans une partie coaxiale interne du corps mâle et qui débouchent chacune dans le passage externe de l'élément mâle,
- le tiroir mâle comporte, sur une surface interne, un joint d'étanchéité interne qui est en appui contre la surface extérieure de la partie coaxiale interne du corps mâle dans les positions accouplée et désaccouplée,
- en position désaccouplée, le joint d'étanchéité interne prend appui sur le corps mâle à l'avant de chaque ouverture distale, et
- en position accouplée, le joint d'étanchéité interne prend appui sur le corps mâle à l'arrière de chaque ouverture distale,
ou :
- le corps femelle délimite un passage de liaison entre le passage externe de l'élément femelle et le passage externe de l'élément mâle lors de l'accouplement des éléments, ce passage de liaison s'étendant entre au moins une ouverture distale et au moins une ouverture proximale, qui sont délimitées dans une partie coaxiale externe du corps femelle et qui débouchent chacune dans le passage externe de l'élément femelle,
- le tiroir femelle comporte, sur une surface externe, un joint d'étanchéité externe qui est en appui contre une surface intérieure de la partie coaxiale externe du corps femelle dans les positions accouplée et désaccouplée,
- en position désaccouplée, le joint d'étanchéité externe prend appui sur le corps femelle à l'avant de chaque ouverture distale, et
- en position accouplée, le joint d'étanchéité externe prend appui sur le corps femelle à l'arrière de chaque ouverture distale.

Grâce à l'invention, le joint d'étanchéité du tiroir mâle ou femelle, qui assure l'étanchéité avec le corps de l'élément mâle ou femelle en position désaccouplée, se trouve à l'arrière de chaque ouverture distale en position accouplée, si bien qu'il n'est pas exposé au fluide circulant dans le passage externe des éléments mâle et femelle en position accouplée. Ce joint est en effet en appui contre une surface extérieure de la partie interne du corps mâle ou sur une surface intérieure de la partie externe du corps femelle suivant le mode de réalisation. Il est donc protégé par les parois du corps mâle ou du corps femelle en position accouplée. Plus généralement, l'ensemble des joints d'étanchéité qui servent à réaliser l'étanchéité du passage externe sont protégés du passage de fluide en position accouplée. Le risque de fuite en position désaccouplée est donc limité.

Selon des aspects avantageux mais non obligatoire de l'invention, un tel raccord peut comporter une ou plusieurs des caractéristiques suivantes, prises dans toute combinaison techniquement admissible :
- Lors de l'accouplement et du désaccouplement, le joint d'étanchéité interne de la surface interne du tiroir mâle en contact avec la surface extérieure de la partie interne du corps mâle, ou le joint d'étanchéité externe de la surface externe du tiroir femelle est en contact étanche avec la surface intérieure de la partie externe du corps femelle.
- La partie coaxiale externe du corps femelle a une partie distale équipée, sur sa surface interne, d'un joint d'étanchéité qui est en contact avec le corps mâle en position accouplée, entre les ouvertures proximale et distale.
- En position accouplée, le tiroir mâle et le corps femelle forment, au niveau de leur face avant, un passage radial de fluide entre le passage externe de l'élément mâle et le passage de liaison.
- La face avant du tiroir mâle comporte des ergots de contact avec la face avant du corps femelle, alors que le passage radial de fluide s'étend de manière périphérique entre les ergots.
- La face avant du corps femelle comporte des ergots de contact avec la face avant du tiroir mâle, alors que le passage radial de fluide s'étend de manière périphérique entre les ergots.
- En position accouplée, le joint d'étanchéité interne du tiroir mâle prend appui sur le corps mâle à l'arrière de chaque ouverture distale et à l'avant de chaque ouverture proximale, alors que le passage externe de l'élément mâle s'étend à l'intérieur du tiroir mâle vers le passage de liaison.
- La partie coaxiale interne du corps femelle est pourvue d'au moins une ouverture radiale distale apte à mettre en communication le passage interne de l'élément mâle avec le passage interne de l'élément femelle en position accouplée.
- La partie coaxiale interne du corps femelle est pourvue d'au moins une ouverture radiale proximale par rapport à l'ouverture distale, apte à mettre en communication les passages interne et externe de l'élément femelle en position désaccouplée.
- Lors de l'accouplement, le tiroir femelle obture la ou chaque ouverture radiale proximale de la partie coaxiale interne du corps femelle et libère la ou chaque ouverture radiale distale de la partie coaxiale interne du corps femelle.
- La partie coaxiale interne du corps femelle est pourvue d'au moins une ouverture, apte à mettre en communication les passages interne et externe de l'élément femelle en position désaccouplée et à mettre en communication les passages internes des deux éléments de raccord en position accouplée.
- Les éléments mâle et femelle sont chacun prévus pour être reliés à un tube coaxial de passage de fluide.
- Le passage interne est un passage de fluide haute pression, alors que le passage externe est un passage de fluide basse pression.
- L'élément mâle comprend, en outre, une soupape centrale mobile dans le passage interne de l'élément mâle et ayant un corps de soupape, le corps de soupape est en contact étanche avec le corps mâle en position désaccouplée, et le contact étanche entre le corps de soupape et le corps mâle est rompu à l'accouplement.
- L'élément mâle est équipé d'un organe de purge, qui est maintenu élastiquement en contact étanche contre une embouchure distale du passage interne et qui est accessible depuis l'environnement extérieur pour libérer le passage interne vers l'extérieur.
- La partie coaxiale interne du corps mâle délimite au moins un passage de dépressurisation apte à mettre en communication les passages interne et externe de l'élément mâle en position désaccouplée du raccord.
- Le passage de dépressurisation débouche dans le passage de liaison délimité par le corps mâle.
- L'élément mâle comprend, en outre, une soupape centrale mobile dans le passage interne de l'élément mâle et la soupape centrale obture le passage de dépressurisation en position accouplée du raccord.

L'invention et ses autres avantages apparaitront plus clairement à la lumière de la description qui va suivre de cinq modes de réalisation d'un raccord conforme à son principe, donnée uniquement à titre d'exemple et faite en référence aux dessins annexés dans lesquels :
- la figure 1 est une vue en perspective d'un raccord conforme à un premier mode de réalisation de l'invention, représenté en position désaccouplée,
- la figure 2 est une vue à plus grande échelle de l'encerclé II à la figure 1,
- la figure 3 est une coupe longitudinale d'un élément mâle, appartenant au raccord des figures 1 et 2 en position désaccouplée,
- la figure 4 est une coupe longitudinale d'un élément femelle, appartenant au raccord des figures 1 et 2 en position désaccouplée,
- la figure 5 est une coupe longitudinale du raccord des figures 1 et 2 en position désaccouplée,
- la figure 6 est une coupe analogue à la figure 5, dans laquelle le raccord est représenté dans une position intermédiaire entre la position désaccouplée et la position accouplée,
- la figure 7 est une vue à plus grande échelle du détail VII à la figure 6,
- la figure 8 est une coupe analogue aux figures 5 et 6, dans laquelle le raccord est représenté en position accouplée,
- la figure 9 est une vue à plus grande échelle du détail IX à la figure 8,
- la figure 10 est une coupe longitudinale analogue à la figure 8, d'un raccord conforme à un deuxième mode de réalisation de l'invention,
- les figures 11 et 12 sont des coupes analogues aux figures 5 et 8 d'un raccord conforme à un troisième mode de réalisation de l'invention,
- la figure 13 est une coupe longitudinale analogue à la figure 3, représentant un élément mâle appartenant à un raccord conforme à un quatrième mode de réalisation de l'invention,
- la figure 14 est une coupe analogue à la figure 13, dans laquelle l'élément mâle est dans une configuration de purge,
- la figure 15 est une vue à plus grande échelle de l'encadré XV de la figure 14,
- la figure 16 est une coupe longitudinale analogue à la figure 8, d'un raccord conforme à un cinquième mode de réalisation de l'invention, et
- la figure 17 est une vue à plus grande échelle de l'encadré XVII de la figure 16.

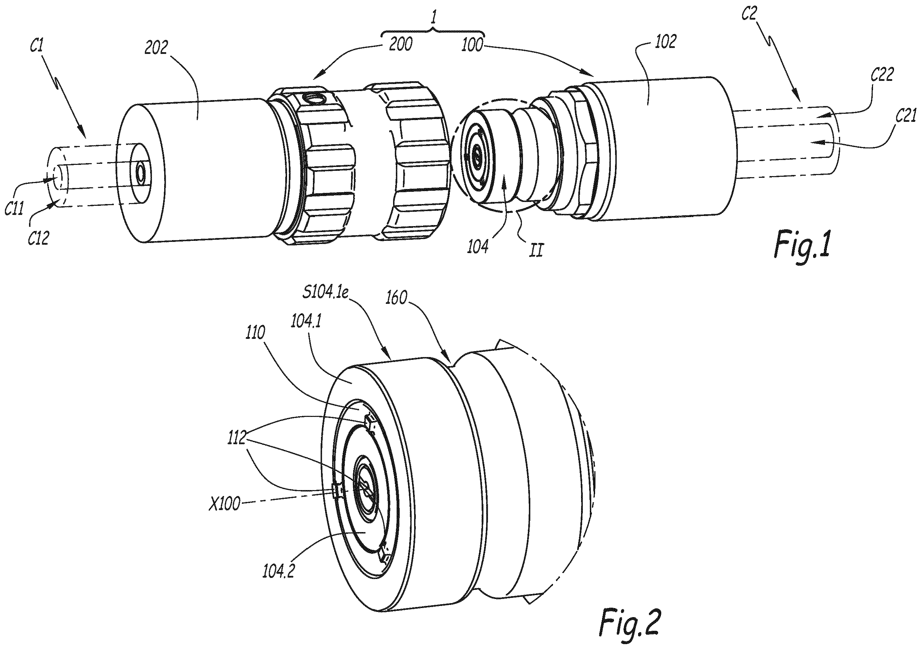

Sur les figures 1 à 9 est représenté un raccord fluidique 1 permettant de connecter deux canalisations C1 et C2, représentées en traits mixtes uniquement aux figures 1,3 et 4, pour relier un outil hydraulique non représenté à une pompe hydraulique non représentée. Les deux canalisations ont une structure du type coaxiale et définissent un passage de fluide interne C11 ou C21 et un passage de fluide externe C21 ou C22, annulaire et entourant coaxialement le passage de fluide interne. En pratique, un passage de fluide interne C11 ou C21 correspond à un passage haute pression, c'est-à-dire à un passage d'alimentation de l'outil hydraulique, alors qu'un passage de fluide externe C12 ou C22 est un passage basse pression, qui correspond au fluide refoulé par l'outil hydraulique vers un réservoir de la pompe hydraulique. Le fluide peut par exemple être de l'huile ou de l'eau, avec une pression élevée, notamment supérieure à 300 bar.

Le raccord 1 comprend un élément mâle 100 adapté pour être fixé à une extrémité de la canalisation C2 reliée à l'outil et un élément femelle 200 complémentaire, adapté pour être fixé à une extrémité de la canalisation C1 reliée à la pompe.

L'élément mâle 100 est mieux visible à la figure 3. L'élément mâle 100 est à géométrie de révolution autour d'un axe central X100. En particulier, l'élément mâle 100 est globalement de forme cylindrique centrée sur l'axe X100.

Dans la suite de la description, un composant d'un élément de raccord disposé à l'avant ou de manière distale est un composant qui est orienté en direction de l'élément de raccord complémentaire en position accouplée du raccord, alors qu'un composant disposé à l'arrière ou de manière proximale est un composant qui est orienté à l'opposé par rapport à l'élément de raccord complémentaire en position accouplée, c'est-à-dire en direction de la canalisation à l'extrémité de laquelle est monté l'élément de raccord. De plus, pour un élément de raccord considéré, les directions axiale, radiale, centripète et centrifuge doivent être interprétées par rapport à l'axe central de cet élément de raccord. Ainsi, la direction axiale de l'élément mâle 100 ou de l'élément femelle 200 est parallèle à l'axe central X100 ou X200 de l'élément considéré.

L'élément mâle 100 comprend un corps arrière 102 qui est tubulaire et centré sur l'axe X100. Un tube 154 est disposé à l'intérieur du corps 102. Ce tube 154 est immobilisé axialement par un cavalier fixe 158. Plus précisément, le tube 154 comporte une rainure périphérique 156 dans laquelle est engagé le cavalier 158. Le cavalier 158 entoure donc, au moins partiellement, le tube 154. Le chevauchement du cavalier 158 autour du tube 154 implique que le cavalier 158 et le tube 154 sont solidaires axialement l'un de l'autre.

Le corps arrière 102 comporte, à l'avant, un taraudage 136 à l'intérieur duquel est vissé un corps avant 104. A cet effet, le corps 104 comporte, à l'arrière, une partie filetée 134 ayant un pas de vis complémentaire de celui du taraudage 136.

Le corps avant 104 comprend deux parties coaxiales 104.1 et 104.2 qui sont globalement de géométrie tubulaire centrée sur l'axe X100. Les parties coaxiales 104.1 et 104.2 forment respectivement une partie coaxiale externe et une partie coaxiale interne du corps 104. L'extrémité avant du tube arrière 154 est engagée dans la partie coaxiale interne 104.2 du corps 104. Le tube 154 est donc en partie emmanché dans le corps 104. Le corps 104 délimite également des trous traversants 132 définis à l'arrière du corps 104. Les trous 132 s'étendent parallèlement à l'axe X100 et sont distribués de manière régulière autour de l'axe X100.

L'élément mâle 100 définit un passage interne de fluide 108, qui s'étend axialement à travers l'élément mâle 100. Plus précisément, le passage interne 108 comprend un premier tronçon 108.1 défini à l'intérieur du tube 154 et un deuxième tronçon 108.2 défini à l'intérieur de la partie coaxiale interne 104.2 du corps 104.

L'élément mâle 100 comprend aussi un passage externe de fluide 106, qui entoure le passage interne 108 à travers l'élément mâle 100. Le passage externe 106 comprend un premier tronçon 106.1 défini entre le tube 154 et le corps 102 et un deuxième tronçon 106.2 défini entre les parties coaxiales 104.1 et 104.2 du corps 104. Ces premier et deuxième tronçons 106.1 et 106.2 sont reliés par les trous axiaux 132 du corps 104. Le passage externe 106 comprend une embouchure distale E106, correspondant à l'orifice annulaire défini entre les extrémités distales des parties coaxiales 104.1 et 104.2. Les passages 108 et 106 sont coaxiaux.

La partie externe 104.1 du corps 104 comporte une surface radiale extérieure S104.1e qui est pourvue d'un logement périphérique 160, c'est-à-dire une gorge, circulaire autour de l'axe X100. La partie coaxiale externe 104.1 comporte également une surface radiale interne S104.1i qui définit, à l'avant, un logement de réception d'un joint d'étanchéité interne 116. Ce logement est une gorge périphérique interne de la partie coaxiale externe 104.1.

La partie coaxiale interne 104.2 du corps avant 104 comporte une surface radiale externe S104.2e et une surface radiale interne S104.2i. La surface radiale interne S104.2.i définit, à l'avant, un logement de réception d'un joint d'étanchéité interne 105. Ce logement est une gorge périphérique interne de la partie coaxiale interne 104.2.

La partie coaxiale interne 104.2 du corps avant 104 comporte un tronçon 104.2t ayant une double peau formée d'une cloison radiale interne 104.2v1 et d'une cloison radiale externe 104.2v2. La partie coaxiale interne 104.2 du corps avant 104 délimite donc un passage annulaire 128, qui est défini entre les deux peaux 104.2v1 et 104.2v2 de ce tronçon 104.2t. Plus précisément, la surface radiale externe S104.2e comporte une série d'ouvertures proximales 126 et une série d'ouvertures distales 130. Les ouvertures 126 et 130 sont des trous radiaux traversant la cloison radiale externe 104.2v2 du tronçon 104.2t. Les ouvertures 126 et 130 sont réparties de manière régulière autour de l'axe X100 et sont disposées à l'arrière par rapport au joint d'étanchéité 105. Les ouvertures 130 sont réparties autour de l'axe X100 avantageusement selon un même plan normal à l'axe. Les ouvertures 126 et 130 débouchent chacune dans le passage annulaire 128. Le passage annulaire 128 s'étend, de manière axiale, entre les ouvertures 126 et 130. Le passage 128 forme donc une veine de dérivation du passage externe 106.

Un tiroir mâle 110 est disposé coaxialement entre les parties 104.1 et 104.2, c'est-à-dire dans le passage externe 106. Ce tiroir 110 est mobile axialement et est soumis à un effort élastique dirigé vers l'avant, qui est généré par un ressort 120. Ce ressort 120 s'étend entre un épaulement 122 du tiroir mâle 110 et un épaulement 124 défini sur l'arrière de la partie coaxiale interne 104.2. Par ailleurs, le tiroir 110 comprend, à l'arrière, une jupe 118, qui entoure une partie du ressort 120. Dans l'exemple, cette jupe 118 est monobloc, mais elle peut aussi être vissée, ou rapportée d'une autre façon, sur le reste du tiroir 110.

Le tiroir mâle 110 définit une surface radiale externe S110e et une surface radiale interne S110i. La surface radiale interne S110i délimite, à l'avant, un logement de réception d'un joint d'étanchéité interne 114. Ce logement est une gorge périphérique interne du tiroir 110.

En position désaccouplée, le joint interne 114 est disposé à l'avant de chaque ouverture distale 130. La face d'extrémité avant du tiroir 110, qui est perpendiculaire à l'axe central X100 de l'élément mâle 100, comporte des ergots 112 qui font saillie vers l'avant par rapport au reste du tiroir 110. Ces ergots 112 sont au nombre de trois et sont régulièrement répartis autour de l'axe X100. Comme visible à la figure 2, les ergots 112 dépassent par rapport à la face avant de l'élément mâle 100.

Une soupape centrale 140 est disposée à l'intérieur de la partie coaxiale interne 104.2 du corps avant 104. En position désaccouplée, la soupape 140 est disposée à l'extrémité avant de l'élément 100. Elle comprend un corps de soupape 142 pourvu, à l'arrière, d'une série de larges ailettes 144 entre lesquelles le fluide peut circuler. Le corps de soupape 142 est creux, c'est-à-dire qu'il définit une ouverture axiale ménagée entre deux orifices, parmi lesquels l'orifice avant est référencé 146. Le corps de soupape 142 comprend une cavité de réception d'un organe de purge tel qu'un obturateur 150. Dans l'exemple, l'obturateur 150 est une bille. Lorsque la soupape 140 est fermée, la bille 150 prend appui de manière étanche contre une embouchure distale du passage interne 108, notamment contre un joint d'étanchéité 148 disposé au contact d'un épaulement interne du corps de soupape 142. L'obturateur 150 est soumis à un effort élastique dirigé vers l'avant et généré par un ressort 152 intercalé entre l'obturateur 150 et un épaulement interne ménagé à l'arrière du corps de soupape 142.

La soupape 140 est également un outil de purge qui permet, en enfonçant un outil dans l'orifice 146, de déplacer axialement l'obturateur 150 vers l'arrière, à l'encontre de l'effort élastique du ressort 152, pour purger le fluide circulant dans le passage interne 108 de l'élément mâle 100. Cela a pour effet de faire baisser la pression résiduelle dans le passage de fluide interne C21, donc dans l'outil. Cette étape de purge peut être effectuée avant l'accouplement pour faciliter le repoussement de la soupape 140. L'opération de connexion nécessite alors moins d'efforts de la part de l'opérateur.

La soupape 140 est mobile axialement à l'intérieur du passage interne 108. Elle est soumise à un effort élastique dirigé vers l'avant, qui est généré par un ressort 162 intercalé entre un épaulement ménagé sur les ailettes 144 et un épaulement radial interne 164 formé à l'arrière de la partie coaxiale interne 104.2.

En position désaccouplée, c'est-à-dire dans la position des figures 1 à 3 et 5, le tiroir mâle 110 obture de manière étanche l'embouchure distale E106 du passage extérieur 106. L'étanchéité est assurée, d'une part, par le joint 114 du tiroir 110 qui prend appui de manière étanche contre la surface radiale externe S104.2e de la partie coaxiale interne 104.2 et, d'autre part, par le joint d'étanchéité interne 116 qui prend appui de manière étanche contre la surface radiale externe S110e du tiroir 110.

En outre, la soupape 140 obture de manière étanche le passage interne 108 en position désaccouplée de l'élément mâle 100. Plus précisément, le passage 108 est obturé de manière étanche par coopération entre le corps de soupape 142 et la partie coaxiale interne 104.2 du corps avant 104, puisque le joint d'étanchéité interne 105 porté par la partie coaxiale interne 104.2 prend appui de manière étanche contre la surface extérieure du corps de soupape 142.

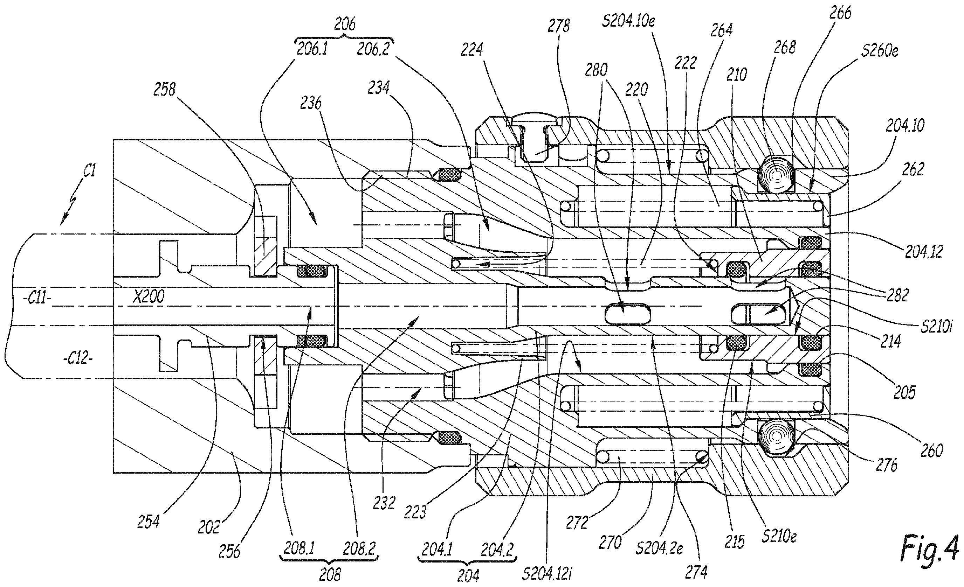

L'élément femelle 200 est mieux visible à la figure 4. L'élément femelle 200 est à géométrie de révolution autour d'un axe central X200. En particulier, l'élément femelle 200 est globalement de forme cylindrique centrée sur l'axe X200.

L'élément femelle 200 comprend un corps arrière 202 qui est tubulaire et centré sur l'axe X200. Un tube 254 est disposé à l'intérieur du corps 202. Ce tube 254 est immobilisé axialement par un cavalier fixe 258. Plus précisément, le tube 254 comporte une rainure périphérique 256 dans laquelle est engagé le cavalier 258. Le cavalier 258 entoure donc, au moins partiellement, le tube 254. Le chevauchement du cavalier 258 autour du tube 254 implique que le cavalier 258 et le tube 254 sont solidaires axialement l'un de l'autre.

Le corps arrière 202 comporte, à l'avant, un taraudage 236 à l'intérieur duquel est vissé un corps avant 204. A cet effet, le corps 204 comporte, à l'arrière, une partie filetée 234 ayant un pas de vis complémentaire de celui du taraudage 236.

Le corps avant 204 comprend deux parties coaxiales 204.1 et 204.2 qui sont globalement de géométrie tubulaire centrée sur l'axe X200. Les parties coaxiales 204.1 et 204.2 forment respectivement une partie coaxiale externe et une partie coaxiale interne du corps 204. L'extrémité avant du tube arrière 254 est engagée dans la partie coaxiale interne 204.2 du corps 204. Le tube 254 est donc en partie emmanché dans le corps 204. Le corps 204 délimite également des trous traversants 232 définis à l'arrière du corps 204. Les trous 232 s'étendent parallèlement à l'axe X200 et sont distribués de manière régulière autour de l'axe X200.

L'élément femelle 200 comprend un passage interne de fluide 208, qui s'étend axialement à travers l'élément femelle 200. Plus précisément, le passage interne 208 comprend un premier tronçon 208.1 défini à l'intérieur du tube 254 et un deuxième tronçon 208.2 défini à l'intérieur de la partie coaxiale interne 204.2 du corps 204.

L'élément femelle 200 comprend aussi un passage externe de fluide 206, qui entoure le passage interne 208 à travers l'élément femelle 200. Le passage externe 206 comprend un premier tronçon 206.1 défini entre le tube 254 et le corps 202 et un deuxième tronçon 206.2 défini entre les parties coaxiales 204.1 et 204.2 du corps 204. Les premier et deuxième tronçons 206.1 et 206.2 sont reliés par les trous axiaux 232 du corps 204. Le passage externe 206 comprend une embouchure distale E206, correspondant à l'orifice annulaire défini entre les extrémités distales des parties coaxiales 204.1 et 204.2. Les passages 208 et 206 sont coaxiaux.

Les passages internes 108 et 208, respectivement des éléments 100 et 200, forment le chemin aller du fluide allant de la pompe à l'outil, alors que les passages externes 106, 206 et le passage de liaison 128 forment le chemin retour du fluide allant de l'outil au réservoir de la pompe. Ainsi, à l'aller, le fluide circule de l'élément femelle 200 vers l'élément mâle 100, et inversement au retour.

La partie coaxiale externe 204.1 du corps 204 comprend deux douilles coaxiales 204.10 et 204.12 qui s'étendent axialement vers l'avant, la douille 204.10 entourant la douille 204.12. La douille extérieure 204.10 définit une surface radiale externe S204.10e. La douille 204.10 comporte, à l'avant, des trous radiaux traversants 266 dans lesquels sont logés des billes de verrouillage 268. En position désaccouplée, les billes de verrouillage 268 font saillie radialement vers l'extérieur par rapport à la surface radiale externe S204.10e de la douille 204.10.

La douille 204.12 comporte une surface radiale interne S204.12i. Un logement de réception d'un joint d'étanchéité interne 205 est défini à l'avant de la surface radiale interne S204.12i de la douille 204.12. Ce logement est une gorge périphérique interne de la douille 204.10.

La partie coaxiale interne 204.2 du corps 204 est fermée à son extrémité avant. Elle comporte une série d'ouvertures proximales 280 et une série d'ouvertures distales 282. Les ouvertures 280 et 282 sont des trous radiaux traversants qui sont répartis de manière régulière autour de l'axe X200.

En position désaccouplée, les ouvertures proximales 280 assurent une communication entre le passage externe 206 et le passage interne 208 de l'élément femelle 200. Cela correspond à une fonction « by-pass ». Ainsi, l'élément femelle 200 peut être fixé à une canalisation C1 dans laquelle il y a une pression de service, c'est-à-dire dans laquelle le fluide circule en boucle dans les passages interne C11 et externe C12 de la canalisation. La pompe reliée au flexible sur lequel est fixé l'élément femelle 200 peut donc fonctionner sans que l'outil soit connecté.

Un tiroir femelle 210 est mobile axialement autour de la partie coaxiale interne 204.2 du corps 204, c'est-à-dire à l'intérieur du passage externe 206. Ce tiroir 210 comporte une surface radiale interne S210.i et une surface radiale externe S210.e. Deux logements de réception de joints d'étanchéité internes 214 et 215 sont définis sur la surface radiale interne S210.i du tiroir femelle 210, le joint d'étanchéité 214 étant disposé à l'avant par rapport au joint d'étanchéité 215. Ces logements sont formés par des gorges périphériques internes du tiroir 210. Le tiroir femelle 210 est soumis à un effort élastique dirigé vers l'avant, qui est généré par un ressort 220 intercalé entre un épaulement arrière 222 du tiroir femelle 210 et une fente annulaire 224 ménagée dans la partie arrière de la partie coaxiale interne 204.2 du corps 204.

Une bague mémoire 260 est disposée coaxialement entre les douilles 204.10 et 204.12 de la partie coaxiale externe 204.1. Cette bague mémoire 260 comprend un épaulement radial interne 262 disposé à l'extrémité avant de la bague mémoire 260. La bague mémoire 260 est mobile axialement et elle est soumise à un effort élastique dirigé vers l'avant, qui est généré par un ressort 264 intercalé entre l'épaulement 262 et une portion arrière de la partie coaxiale externe 204.1. En position désaccouplée, la bague mémoire 260 recouvre radialement et intérieurement les billes de verrouillage 268. A cet effet, la bague mémoire 260 comporte une surface radiale externe S260e qui est en contact avec les billes de verrouillage 268 en position désaccouplée.

L'élément femelle 200 comporte également une bague de verrouillage 270, qui est agencée coaxialement autour de la partie coaxiale externe 204.1 du corps 204. Cette bague de verrouillage 270 est mobile axialement et elle est soumise à un effort axial élastique dirigé vers l'avant, qui est généré par un ressort 272 intercalé entre un épaulement 274 de la bague 270 et la partie coaxiale externe 204.1 du corps 204. La bague de verrouillage 270 comporte une surface radiale interne sur laquelle est défini, à l'avant, un logement interne 276, c'est-à-dire une gorge, de réception des billes de verrouillage 268. En position désaccouplée, les billes 268 sont logées dans la gorge 276, de sorte qu'elles s'opposent au mouvement de la bague 270 vers l'avant, sous l'effort élastique du ressort 272.

En position désaccouplée, l'embouchure distale E206 du passage externe 206 est obturée de manière étanche par le tiroir femelle 210. En effet, le joint d'étanchéité 214 du tiroir femelle 210 prend appui de manière étanche contre la surface radiale externe S204.2e de la partie 204.2, le tiroir 210 recouvre les ouvertures radiales 282 et le joint d'étanchéité interne 205 du corps 204 prend appui de manière étanche contre la surface radiale externe S210e du tiroir 210.

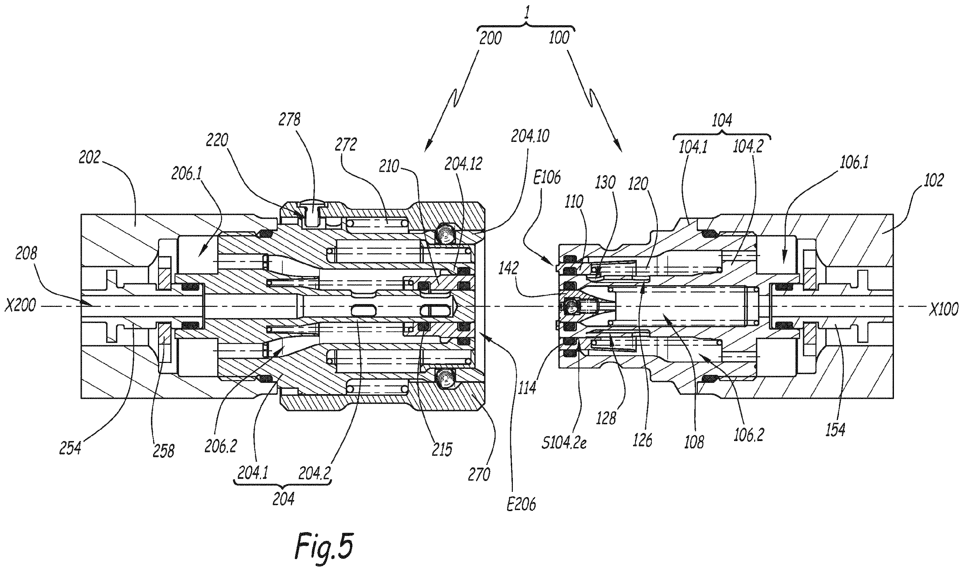

Lors de l'accouplement, il convient d'abord d'aligner l'élément mâle 100 avec l'élément femelle 200. Cette configuration est représentée à la figure 5. Dans cette configuration, les axes X100 et X200 sont confondus. L'opérateur enfonce ensuite l'élément mâle 100 dans l'élément femelle 200.

Durant cette phase d'accouplement, la partie coaxiale externe 104.1 du corps 104 pousse axialement la bague mémoire 260 vers l'arrière, à l'encontre de l'effort élastique du ressort 264, et la partie coaxiale interne 104.2 du corps 104 pousse le tiroir femelle 210 vers l'arrière, à l'encontre de l'effort élastique du ressort 220. D'autre part, le tiroir mâle 110 est repoussé par la douille 204.12 de la partie coaxiale externe 204.1. Plus précisément, le tiroir mâle 110 est repoussé vers l'arrière à l'encontre de l'effort élastique du ressort 120. Le repoussement des tiroirs mâle 110 et femelle 210 s'effectue de plus à l'encontre des efforts de pression interne qui s'exercent dans la même direction que les efforts de ressorts respectifs 120 et 220 à l'accouplement. Ici, ce sont les ergots 112 qui prennent contact avec le corps femelle 204. Enfin, la soupape 140 est repoussée par la partie coaxiale interne 204.2 du corps femelle 204. Plus précisément, la soupape 140 est repoussée vers l'arrière, à l'encontre de l'effort élastique du ressort 162.

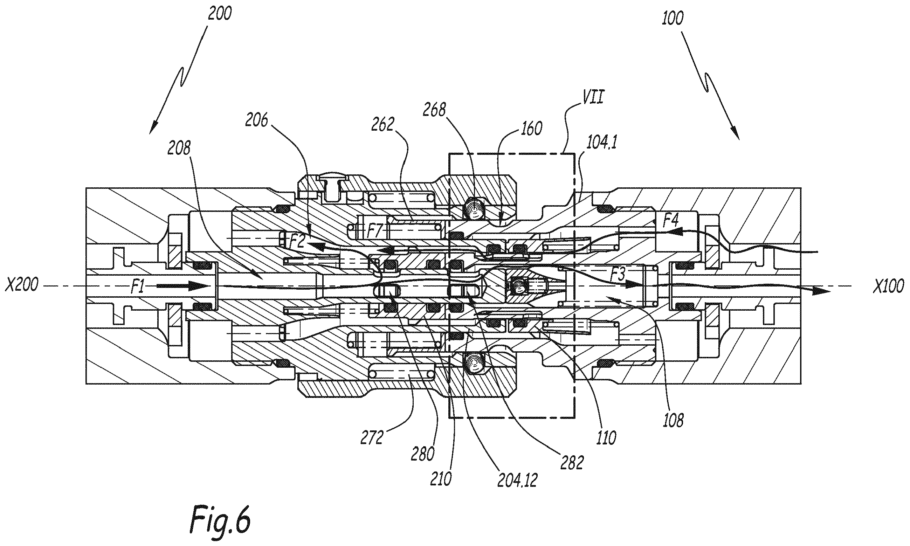

Le raccord passe donc de sa position désaccouplée de la figure 5 à une position intermédiaire représentée à la figure 6. Dans cette position intermédiaire, les éléments mâle et femelle ne sont pas complètement accouplés. Cependant, l'élément mâle 100 est suffisamment enfoncé à l'intérieur de l'élément femelle 200 pour mettre en communication les passages internes 108 et 208, respectivement des éléments 100 et 200. Par conséquent, une partie du fluide circulant dans le passage interne 208 de l'élément femelle 200, selon la flèche F1, rejoint le passage interne 106 de l'élément mâle 100, comme représenté par la flèche F3. Plus précisément, en reculant, le tiroir 210 cesse de recouvrir les ouvertures distales 282 de la partie 204.2 et le recul de la soupape 140 entraine la rupture de l'étanchéité au niveau du joint 105. Le fluide peut ainsi rejoindre l'élément mâle 100 en passant radialement dans les ouvertures distales 182, puis axialement entre le corps de soupape 142 et la partie coaxiale interne 104.1 du corps mâle 104.

En position intermédiaire, le tiroir femelle 210 n'est pas assez reculé pour obturer de manière étanche les ouvertures proximales 280 pratiquées dans la partie coaxiale interne 204.2 du corps femelle 204. Par conséquent, le fluide circulant dans le passage interne 208 de l'élément femelle 200, selon la flèche F1, peut encore s'échapper, par les ouvertures 280, en direction du passage externe 206, comme représenté par la flèche F2. Le fluide retourne alors en direction du réservoir de la pompe. Plus précisément, le fluide refoulé à basse pression circule dans le passage externe C22 de la canalisation C2, puis dans le passage externe 106 de l'élément mâle 100.

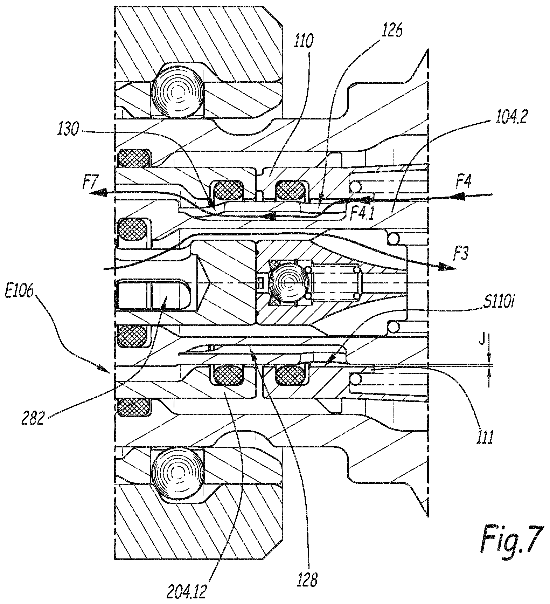

Comme mieux visible à la figure 7, le fluide s'échappe ensuite, selon la flèche F4.1, à travers un espace annulaire défini entre une partie proximale 111 du tiroir 110 et la surface externe S104.2e de la partie 104.2 interne du corps mâle. Un jeu radial J est en effet présent entre la partie proximale 111 du tiroir 110 et la surface externe S104.2e de la partie 104.2. Le fluide rejoint alors le passage annulaire 128 et circule dans ce dernier, selon la flèche F6, jusqu'à parvenir au niveau des ouvertures distales 130, à travers lesquelles il peut s'échapper. Le fluide rejoint enfin le passage externe 206 de l'élément femelle 200 en passant par l'embouchure distale E106, comme représenté par la flèche F7. Le tiroir mâle 110 ne s'oppose donc pas au passage du fluide dans l'embouchure E106 du passage externe 106 en position intermédiaire.

On notera que les joints d'étanchéité 116, 114 et 214 ne sont pas directement exposés au passage du fluide dans cette position et que la communication entre les passages externes 106 et 206 et entre les passages internes 108 et 208 s'effectue simultanément. Cette position intermédiaire correspond à une position « tout communiquant » puisque tous les conduits de passage du fluide communiquent les uns avec les autres.

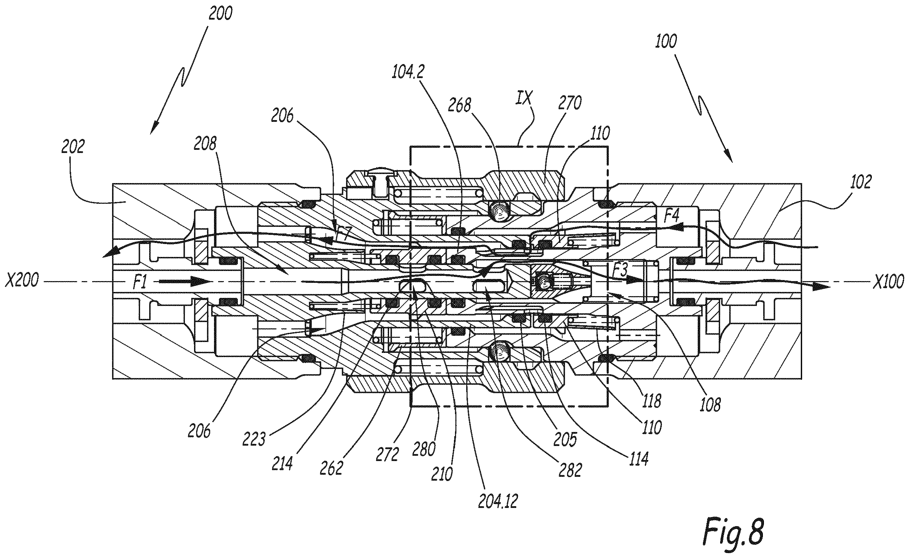

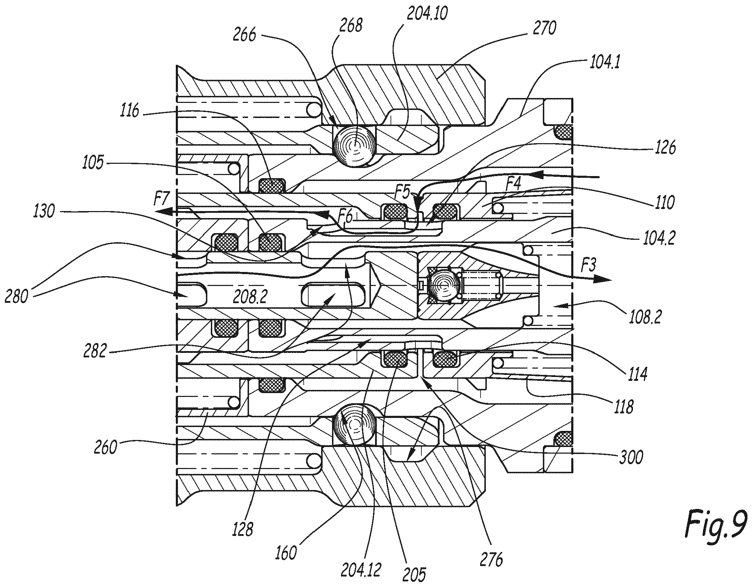

En enfonçant davantage l'élément mâle 100 dans l'élément femelle 200 le raccord 1 passe de la position intermédiaire représentée à la figure 6 à une position complètement accouplée représentée aux figures 8 et 9, où le chemin de retour est dévié par rapport à la position intermédiaire précédemment décrite.

En position accouplée, le logement périphérique 160 défini sur la surface radiale externe S104.1e de la partie coaxiale externe 104.1 est parvenu radialement en regard des billes de verrouillage 268, ce qui a pour effet de déplacer les billes de verrouillage 268 dans le logement périphérique 160. Plus précisément, les billes de verrouillage 268 quittent le logement interne 276 de la bague 270 et se déplacent dans le logement 160 suivant un mouvement centripète par rapport à l'axe X200. Les billes de verrouillage 268 cessent alors de dépasser extérieurement par rapport à la surface radiale externe S204.10e de la douille 204.10. Les billes 268 ne s'opposent alors plus à l'avancée de la bague 270 sous l'effort élastique du ressort 272. Par conséquent, la bague de verrouillage 270 avance et recouvre radialement et extérieurement les billes de verrouillage 268. Les billes de verrouillage 268 sont alors coincées dans les logements 160 et 266 par la surface radiale interne de la bague 270. Les billes de verrouillage 268 permettent donc de solidariser axialement la douille 204.10 de la partie coaxiale externe 204.1 du corps femelle 204 avec la partie coaxiale externe 104.1 du corps mâle 104. Cela permet d'assurer un verrouillage du raccord 1 en position accouplée, c'est-à-dire d'empêcher le désaccouplement du raccord 1 simplement en éloignant les deux éléments de raccord 100 et 200 l'un de l'autre. Autrement dit, le raccord 1 ne peut pas être désaccouplé sans une action positive de l'opérateur, consistant à déverrouiller le raccord 1.

En position accouplée, le joint radial interne 114 du tiroir 110 est disposé à l'arrière de chaque ouverture distale 130 et la face d'extrémité distale du tiroir mâle 110 se trouve au même niveau axial que les ouvertures proximales 126 ménagées dans la partie coaxiale interne 104.2 du corps mâle 104. Ainsi, le fluide circulant en retour dans le passage extérieur 106, selon la flèche F4, passe autour du tiroir 110 et s'échappe vers le passage annulaire 128 en passant de manière centripète entre les ergots 112 du tiroir 110, comme représenté par la flèche F5 à la figure 9. Plus précisément, le fluide passe radialement dans une fente annulaire 300, définie entre le tiroir 110 et la douille 204.12 de la partie coaxiale externe 204.1 du corps femelle 204 et dont l'épaisseur axiale est égale à la longueur axiale des ergots 112. De là, il traverse les ouvertures proximales 126 et pénètre dans le passage annulaire 128. En position accouplée, le tiroir mâle 110 et le corps femelle 204 forment donc, au niveau de leurs faces avant, un passage radial de fluide entre le passage externe 106 de l'élément mâle et le passage annulaire 128. Ce passage radial de fluide est défini de manière périphérique entre les ergots 112. Cela permet préférablement d'éviter que le fluide traverse radialement les spires du ressort 120 de rappel du tiroir mâle 110.

Le fluide circule ensuite vers l'avant de l'élément mâle 100, dans le passage annulaire 128, comme représenté par la flèche F6, pour rejoindre les ouvertures distales 130 et s'échapper dans l'embouchure distale E106, c'est-à-dire autour de la partie coaxiale interne 104.2 du corps mâle 104.

En position accouplée, les tiroirs 110 et 210 ne s'opposent donc plus au passage du fluide dans les embouchures distales, respectivement E106 et E206, des passages externes 106 et 206. Dans cette position, les passages externes 106 et 206, respectivement des éléments mâle et femelle 100 et 200, communiquent l'un avec l'autre. Le passage annulaire 128 forme donc un passage de liaison entre les passages externes 106 et 206, respectivement des éléments 100 et 200. Ce passage de liaison 128 n'appartient donc ni au passage extérieur 106, ni au passage extérieur 206.

En parallèle, en phase accouplée, le tiroir femelle 210 est assez reculé pour obturer de manière étanche les ouvertures proximales 280 pratiquées dans la partie coaxiale interne 204.2 du corps femelle 204. Le tiroir femelle 210 coupe donc la communication directe entre les passages interne et externe, respectivement 208 et 206, de l'élément femelle 200.

Le fluide sortant du passage annulaire 128 s'écoule donc, dans le passage externe 206, comme représenté par la flèche F7.

Comme visible à la figure 8 lorsque le raccord 1 est en position accouplée, les joints d'étanchéité 116, 114 et 205 ne sont pas directement exposés au passage du fluide dans la veine extérieure, formée par la jonction des passages externes 108 et 208, respectivement des éléments mâle et femelle 100 et 200. En effet, en position accouplée, les joints d'étanchéités 116, 114, et 205 sont respectivement plaqués contre la surface radiale externe S204.12e de la douille 204.12 et contre la surface radiale externe S104.2e de la partie coaxiale interne 104.2 du corps mâle 104. De cette manière, les joints 116, 114 et 205 sont maintenus à l'intérieur de leurs logements respectifs, si bien qu'ils ne risquent pas d'être dégradés par le passage du fluide dans la veine extérieure du raccord 1. Le risque qu'un joint d'étanchéité sorte de son logement est donc limité.

Par ailleurs, en position accouplée, le joint d'étanchéité 205 de la partie coaxiale externe 204.1 est en contact étanche avec le corps mâle 104, entre les ouvertures distales 130 et les ouvertures proximales 126. Cela a pour effet que le joint 205 du corps femelle est également protégé du passage du fluide dans la veine extérieure du raccord.

En outre, en position accouplée, l'extrémité arrière de la jupe 118 du tiroir 110 est disposée à proximité de la partie arrière du corps mâle 104, radialement à l'intérieur des trous axiaux 132, de sorte qu'elle guide le fluide sortant des trous 132 sur l'extérieur du tiroir 110. L'écoulement est ainsi facilité et on limite ainsi le passage du fluide entre les spires du ressort 120, donc les pertes de charge.

De même, la partie arrière du corps femelle 204 comprend aussi une jupe 223, dont l'extrémité avant est disposée à proximité du tiroir femelle 210 en position accouplée, de sorte qu'elle guide le fluide vers les trous axiaux 232 et limite le passage de fluide dans les spires du ressort 220.

Pour désaccoupler le raccord 1, il convient de déverrouiller le raccord 1 en tirant axialement la bague de verrouillage 270 vers l'arrière de l'élément femelle 200, de sorte à amener le logement radial interne 276 radialement en regard des billes de verrouillage 268. Les billes de verrouillage 268 se déplacent alors dans le logement 276 de la bague de verrouillage 270, suivant un mouvement centrifuge par rapport à l'axe X200. Les billes de verrouillage 162 quittent alors le logement 160 du corps mâle 104, ce qui a pour effet de désolidariser le corps mâle 104 du corps femelle 204. Il est alors possible de retirer l'élément mâle 100 de l'élément femelle 200.

Grâce aux ressorts de rappel 220 et 264 de l'élément femelle 200, la bague mémoire 260 et le tiroir 210 de l'élément femelle reprennent automatiquement leur position désaccouplée du fait de la séparation des éléments mâle et femelle. De même, les ressorts 120 et 162 de l'élément mâle 100 permettent le rappel automatique du tiroir mâle 110 et de la soupape 140 vers leur position désaccouplée, représentée à la figure 3. La soupape 140 vient alors obturer de manière étanche le passage haute pression 108 de l'élément mâle 100. Le désaccouplement a pour effet de couper successivement la communication entre les passages 106 et 206 et entre les passages 108 et 208. En outre, le rappel du tiroir femelle 210 vers l'avant implique que le tiroir femelle 210 n'obture plus les ouvertures proximales 280 ménagées dans la partie coaxiale interne 204.2 du corps femelle 204, si bien que les passages interne et externe, respectivement 208 et 206 de l'élément femelle 200, communiquent l'un avec l'autre.

Lors de l'accouplement et du désaccouplement, la surface interne S110i du tiroir mâle 110 est en contact étanche avec la surface extérieure S104.2e de la partie interne 104.2 du corps mâle. Le joint interne 114 du tiroir mâle 110 reste donc, au moins localement, au contact de la surface extérieure S104.2e de la partie coaxiale interne 104.2 pendant toute la phase d'accouplement et de désaccouplement. Autrement dit, le joint interne 114 reste en contact avec la surface extérieure S104.2e, au moins localement, quelle que soit la configuration du raccord.

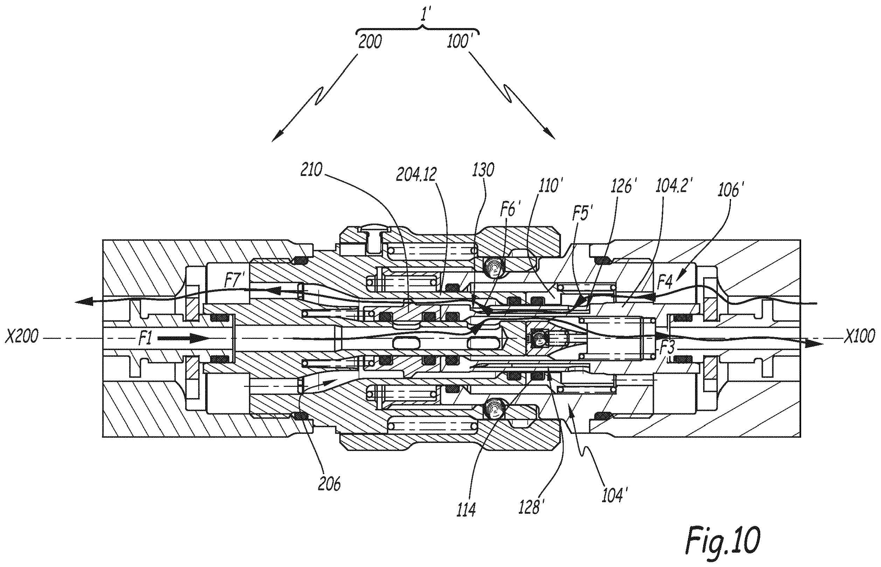

Sur la figure 10 est représenté un deuxième mode de réalisation d'un raccord 1' conforme à l'invention. Par souci de concision, seules les différences par rapport au premier mode de réalisation représenté aux figures 1 et 9 sont décrites ci-après. De plus, les composants du raccord 1' qui sont identiques à ceux du raccord 1 conservent leur référence numérique, alors que les éléments qui diffèrent de ceux du premier mode de réalisation ont une référence numérique incluant leur référence d'origine, suivie d'une prime ('). Enfin, les nouveaux composants portent d'autres références numériques.

Dans ce deuxième mode de réalisation, les ouvertures proximales 126', délimitées dans la peau extérieure de la partie coaxiale interne 104.2' du corps mâle 104' de l'élément mâle 100', sont disposées en arrière par rapport aux ouvertures proximales 126 du raccord selon le premier mode de réalisation. Ainsi, les ouvertures proximales 126' sont disposées à l'arrière du joint 114 en position accouplée et le passage annulaire 128' défini entre les ouvertures 126' et 130 est plus long que le passage 128 du raccord selon le premier mode de réalisation. De plus, le tiroir mâle 110' est agencé par rapport au corps 104' pour que le fluide circulant dans le passage extérieur passe à l'intérieur du tiroir mâle 110' en position accouplée. Le tiroir 110' ne comporte pas d'ergots sur sa face d'extrémité avant, si bien que le contact entre le tiroir mâle 110' et la douille 204.12 est un contact annulaire centré sur l'axe X100. Le joint radial interne 114 du tiroir 110' est disposé à l'avant de chaque ouverture distale 130 en position désaccouplée et à l'arrière de chaque ouverture distale 130 en position accouplée, de sorte qu'il n'est pas exposé au passage du fluide dans le conduit externe 106 ou 206 en position accouplée, ni à l'accouplement.

Le fluide circulant de l'élément femelle 200 vers l'élément mâle 100' s'écoule dans le sens des flèches F1 et F3, comme dans le premier mode de réalisation.

Le fluide circulant en retour, selon la flèche F4, dans le passage extérieur 106' de l'élément mâle 100', ne s'échappe plus radialement entre le tiroir mâle 110' et la douille 204.12 de la partie coaxiale externe 204.1 du corps femelle 204, mais circule radialement dans les ouvertures 126', à l'intérieur du tiroir 110', puis dans le passage annulaire 128', comme représenté par la flèche F5'. Le fluide rejoint ensuite le passage externe 206 de l'élément femelle en passant par les ouvertures 130, comme représenté par la flèche F6'. Il s'écoule ensuite dans le passage 206, comme représenté par la flèche F7'.

Ici l'élément femelle 200 est identique à celui du premier mode de réalisation.

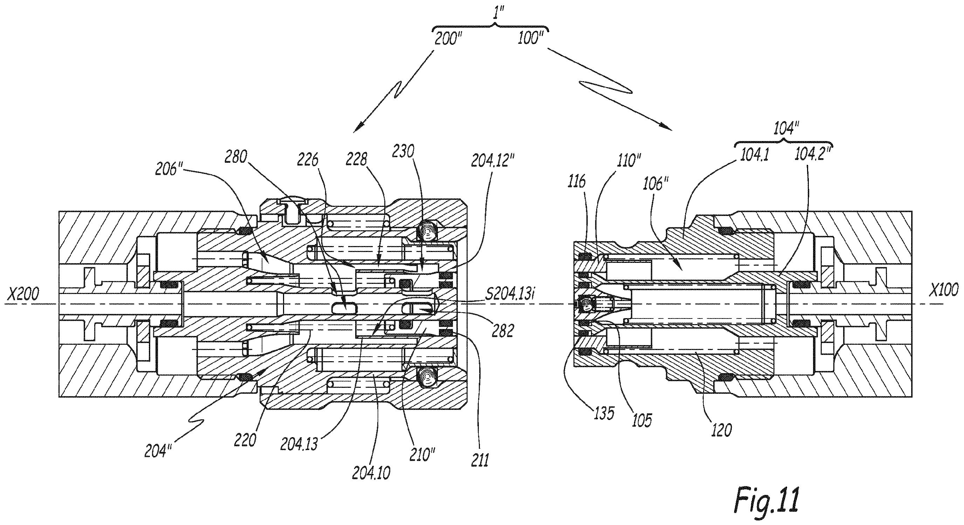

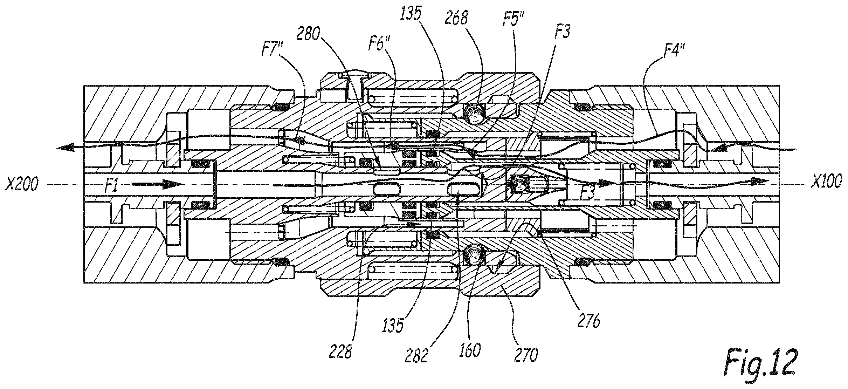

Sur les figures 11 et 12 est représenté un troisième mode de réalisation d'un raccord 1" conforme à l'invention. Ci-après, seuls les éléments qui diffèrent par rapport à ceux du premier mode de réalisation sont décrits. De plus, les composants du raccord 1" qui sont identiques par rapport à ceux du premier mode de réalisation conservent leur référence numérique, alors que les composants différents ont une référence numérique incluant leur référence numérique d'origine suivie d'une double apostrophe ("). Enfin, les éléments nouveaux par rapport au premier ou au deuxième mode de réalisation portent d'autres références numériques.

Dans le raccord 1", la partie coaxiale externe 104.1 du corps avant 104" est identique à celle du premier mode de réalisation mais sa partie coaxiale interne 104.2" ne comporte pas de double peau. En effet, le passage 228 de liaison entre le passage externe 106 de l'élément mâle 100 et le passage externe 206" de l'élément femelle 200" est délimité dans la douille 204.12" de la partie coaxiale externe du corps femelle 204". En effet, la douille 204.12" présente une double peau. Plus précisément, la douille 204.12" comporte un manchon intérieur 204.13 pourvu d'ouvertures radiales distales 230. Les ouvertures distales 230 sont des trous radiaux traversants répartis de manière régulière autour de l'axe central X200 de l'élément femelle 200", avantageusement selon un même plan normal à l'axe. On définit une ouverture proximale 226 comme l'orifice annulaire disposé autour du manchon intérieur 204.13, au niveau de son extrémité axiale arrière. Le passage de liaison 228 est donc défini, autour du manchon intérieur 204.13, entre les ouvertures distales 230 et l'ouverture proximale 226. Les ouvertures 226 et 230 débouchent chacune dans le passage externe 206".

Dans ce mode de réalisation, le tiroir mâle 110" ne comporte ni joints d'étanchéité ni ergots d'extrémités. Cependant, la partie coaxiale interne 104.2" du corps mâle 104" comporte deux joints d'étanchéité 105 et 135, qui sont disposés respectivement dans des logements délimités par les gorges périphériques ménagées dans les surfaces radiales interne et externe de la partie coaxiale interne 104.2" du corps mâle 104". En position désaccouplée, le tiroir mâle 110" obture de manière étanche le passage externe 106" par coopération avec le joint radial interne 116 de la partie coaxiale externe 104.1 et le joint radial externe 135 de la partie coaxiale interne 104.2".

Le tiroir femelle 210" comporte un joint d'étanchéité externe 211, qui est en appui contre une surface intérieure S204.13i du manchon intérieur 204.13 en position désaccouplée, notamment à l'avant de chaque ouverture distale 230.

Lors de l'accouplement, la partie coaxiale interne 104.2" du corps mâle 104" pousse le tiroir femelle 210" vers l'arrière, à l'encontre de l'effort élastique du ressort 220. Le tiroir femelle 210" obture alors les ouvertures proximales 280 pratiquées dans la partie coaxiale interne du corps femelle 204". La communication entre les passages interne et externe de l'élément femelle 200" est donc interrompue. Le fluide circulant de l'élément femelle 200" vers l'élément mâle 100" s'écoule dans le sens des flèches F1 et F3, comme dans le premier mode de réalisation. En parallèle, la partie coaxiale interne 104.2" du corps mâle 104" dépasse les ouvertures radiales distales 230 du manchon 204.13, si bien que le fluide circulant, selon la flèche F4", dans le passage externe 106" de l'élément mâle 100" peut rejoindre le passage de liaison 228 en passant par les ouvertures 230, comme représenté par la flèche F5". Plus précisément, le joint d'étanchéité externe 135 de la partie coaxiale interne 104.2" du corps mâle 104" est disposé à l'avant des ouvertures 226, notamment contre la surface radiale interne S204.13i du manchon 204.13. Le fluide circulant dans le passage externe 106" circule alors dans le passage annulaire 228, puis rejoint le passage externe 206" de l'élément femelle 200" en passant par l'ouverture annulaire proximale 226 formant l'orifice de sortie du passage de liaison 228, comme représenté par la flèche F6". De là, le fluide s'écoule dans le passage 206, comme représenté par la flèche F7".

En position accouplée, le joint d'étanchéité externe 211 est en appui contre la surface intérieure S204.13i du manchon 204.13, notamment à l'arrière de chaque ouverture distale 230.

Comme dans les deux premiers modes de réalisation, il n'y a pas de joints d'étanchéité exposés au passage de fluide dans la veine extérieure 106" ou 206" en position accouplée du raccord 1". En effet, le joint radial extérieur du tiroir femelle 210" et le joint radial extérieur 135 de la partie coaxiale interne 104.2" du corps mâle 104" sont en appui contre la surface radiale interne du manchon 204.13 formant la double peau, c'est-à-dire qu'ils sont protégés du passage du fluide. Il n'y a donc pas de risque d'expulsion des joints dus au passage du fluide. Les joints d'étanchéité sont donc moins dégradés et le risque de fuite est moindre.

Lors de l'accouplement et du désaccouplement, la surface externe du tiroir femelle 210" est en contact étanche avec la surface intérieure S204.13i du manchon 204.13 de la partie externe du corps femelle. Le joint externe 211 du tiroir femelle 210" reste donc, au moins localement, au contact de la surface intérieure S204.13i pendant les phases d'accouplement et de désaccouplement. Autrement dit, le joint externe 211 reste en contact avec la surface intérieure S204.13i, au moins localement, quelle que soit la configuration du raccord 1".

Sur les figures 6 à 9 et 11, les flux F1, F2 à F7" sont représentés chacun par une flèche. En pratique, ils peuvent se décomposer en flux unitaires, non représentés, qui circulent en parallèle dans le raccord 1, 1' ou 1".

Lorsque l'outil relié à l'élément mâle est coupé du circuit de distribution hydraulique, c'est-à-dire de la pompe, il reste une pression résiduelle dans les passages coaxiaux de l'élément mâle. Cette pression résiduelle provient de la phase de fonctionnement précédant la déconnexion. Si l'outil hydraulique est stocké au soleil, l'huile restante dans les passages coaxiaux de la conduite C2 risque de se dilater sous l'effet de la chaleur, ce qui peut entraîner des efforts de pression supplémentaires sur le tiroir mâle et sur le corps de soupape. L'outil de purge 140 décrit précédemment permet de faire baisser la pression résiduelle dans le passage intérieur. Toutefois, une pression résiduelle subsiste dans le passage extérieur basse pression, laquelle s'oppose au recul du tiroir mâle. L'opérateur doit alors vaincre cette pression résiduelle pour accoupler le raccord, ce qui peut s'avérer pénible. Ainsi, ci-après sont décrits deux raccords améliorés conçus pour pallier ce problème.

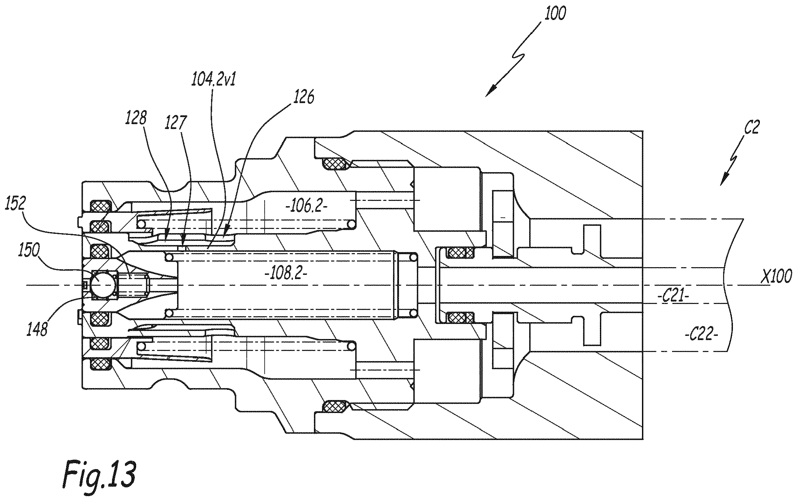

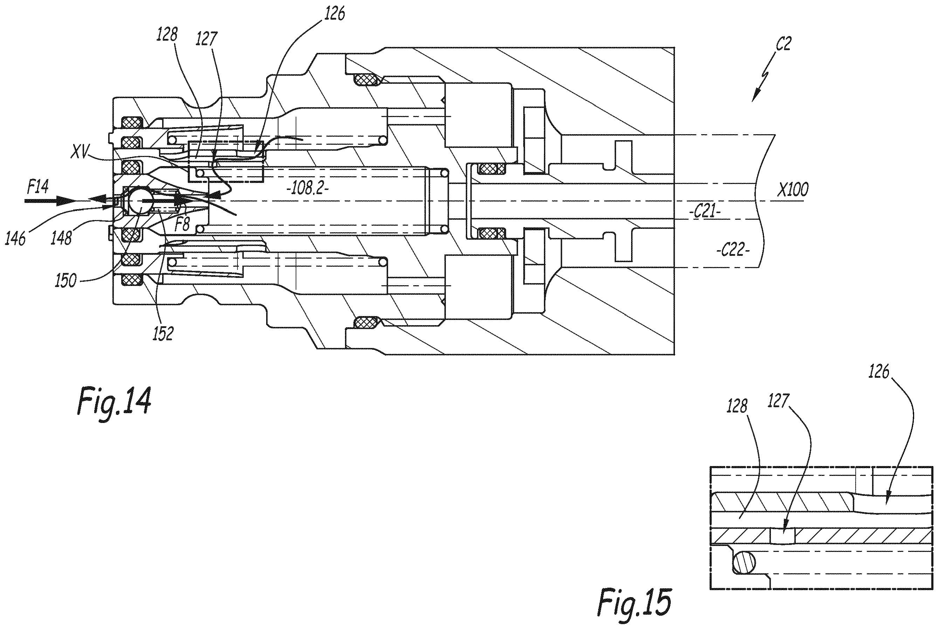

Sur les figures 13 et 14 est représenté un élément mâle 100 appartenant à un raccord conforme à un quatrième mode de réalisation de l'invention. Ci-dessous, seules les différences par rapport au premier mode de réalisation sont décrites. Les composants du raccord des figures 13 et 14 qui sont identiques à ceux du premier mode de réalisation conservent leurs références numériques, alors que les composants différents portent d'autres références numériques.

L'élément mâle 100 de la figure 13 diffère de celui représenté à la figure 3 en ce qu'il comprend, en outre, un passage de dépressurisation 127 apte à mettre en communication les passages interne et externe, respectivement 108 et 106, de l'élément mâle 100 en position désaccouplée du raccord. Plus précisément, le passage de dépressurisation 127 est une ouverture radiale délimitée dans la cloison intérieure 104.2v1 de la partie coaxiale interne 104.2 du corps mâle 104. Le passage de dépressurisation 127 débouche dans le passage de liaison 128 délimité par le corps mâle 104. Ainsi, les passages intérieur et extérieur de l'élément mâle 100, respectivement 108 et 106, ne sont pas isolés l'un de l'autre lorsque le raccord est désaccouplé, mais communiquent l'un avec l'autre. Cela correspond à une fonction « by-pass », comparable à celle décrite ci-dessus en relation avec l'élément femelle 200 du premier mode de réalisation.

Dans la configuration de la figure 14, l'élément mâle 100 est en phase de purge. Un outil non représenté, tel qu'un tournevis, est inséré à travers l'orifice avant 146 du corps de soupape 142 dans le sens de la flèche F14, pour déplacer axialement l'obturateur 150 vers l'arrière, c'est-à-dire dans le sens de la flèche F8, à l'encontre de l'effort élastique du ressort 152 et purger ainsi le fluide circulant dans le passage interne 108 de l'élément mâle 100. Cela a pour effet de faire baisser la pression résiduelle dans le conduit interne C21 de la canalisation C2 reliée à l'élément mâle 100. De surcroît, le passage de dépressurisation 127 permet également de purger le fluide circulant dans le passage externe 106 de l'élément mâle 100. En effet, comme représenté aux figures 14 et 15 par les flèches en gras, le fluide circulant dans le passage externe 106 de l'élément mâle 100 rejoint le passage interne 108 à travers le passage de dépressurisation 127 et est purgé par l'orifice avant 146 de la soupape 140. A l'inverse du mode de réalisation de la figure 3, l'étape de purge permet donc également de faire baisser la pression résiduelle dans le conduit externe C22 de la canalisation C2 reliée à l'outil. Il n'y a alors peu ou pas de pression résiduelle dans les passages coaxiaux de l'élément mâle, ce qui permet de connecter le raccord sans efforts.

En variante applicable au quatrième mode de réalisation, plusieurs passages de dépressurisation 127 peuvent être pratiqués dans la cloison intérieure 104.2v1 de la partie coaxiale interne 104.2 du corps mâle 104. Ces passages peuvent être répartis autour de l'axe central X100 de l'élément mâle 100 et peuvent également être distribués axialement le long du passage de liaison 128.

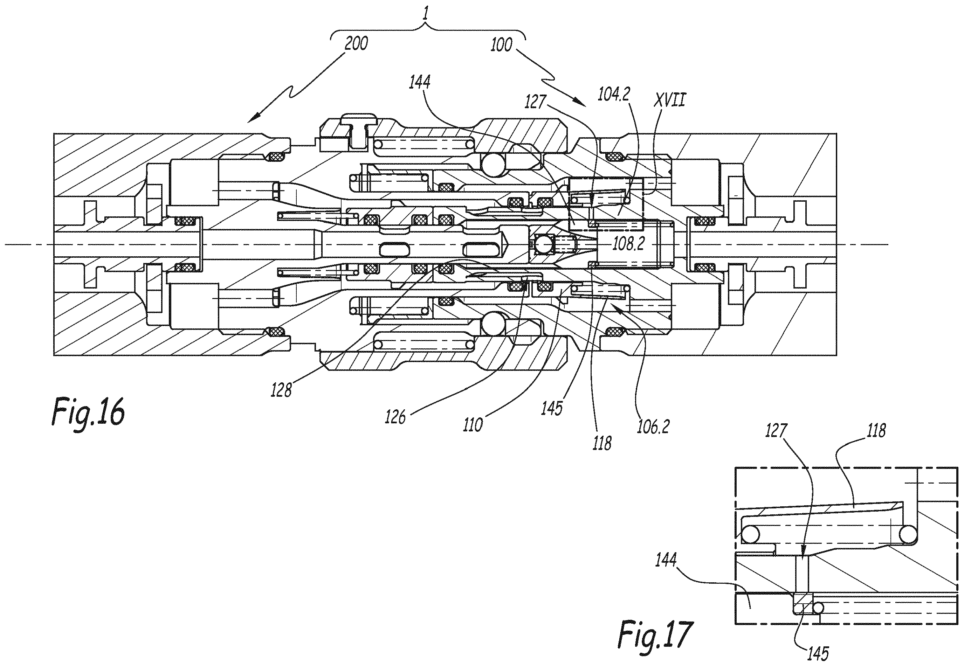

Sur les figures 16 et 17 est représenté un cinquième mode de réalisation d'un raccord 1 conforme à l'invention. Ci-après seuls les éléments qui diffèrent par rapport à ceux du premier mode de réalisation sont décrits. De plus, les composants du raccord 1 qui sont identiques à ceux du premier mode de réalisation conservent leurs références numériques, alors que les autres composants portent d'autres références numériques.

Dans le raccord 1, un passage de dépressurisation 127 est également délimité dans la partie coaxiale interne 104.2 du corps mâle 104. Plus précisément, ce passage de dépressurisation 127 est une ouverture radiale délimitée à l'arrière du passage de liaison 128, c'est-à-dire à l'arrière des ouvertures proximales 126. Ce passage de dépressurisation 127 est également apte à mettre en communication les passages interne et externe, respectivement 108 et 106, de l'élément mâle 100 en position désaccouplée du raccord 1. En position accouplée du raccord, le passage de dépressurisation 127 débouche extérieurement dans le volume interne délimité par la jupe 118 du tiroir mâle 110. De manière avantageuse mais optionnelle, l'élément mâle 100 comprend un élément obturateur 145 positionné pour obturer de manière étanche le passage de dépressurisation 127 en position accouplée du raccord. Dans l'exemple, cet élément obturateur 145 est un joint torique en élastomère disposé à l'arrière de la soupape centrale 140. Il est maintenu dans un logement délimité par les ailettes 144 par l'appui du ressort de soupape 162. Dans ce mode de réalisation, les passages intérieur et extérieur de l'élément mâle 100, respectivement 108 et 106, sont donc communicants à l'état désaccouplé du raccord et isolés l'un de l'autre à l'état accouplé du raccord.

A titre de variante non représentée, le joint 145 n'obture pas de manière complètement étanche le passage de dépressurisation 127. Le joint 145 limite alors simplement la circulation entre les deux passages coaxiaux, respectivement 108 et 106, de l'élément mâle en position accouplée du raccord 1.

Selon une autre variante non représentée, applicable au cinquième mode de réalisation, une pièce mobile différente de la soupape 140 est utilisée pour fermer le passage de dépressurisation 127 à l'état accouplé. Par exemple, cette pièce mobile peut être le tiroir mâle 110, qui vient recouvrir extérieurement le passage 127 lors de l'accouplement.

Selon une autre variante non représentée, applicable au cinquième mode de réalisation, l'élément mâle comprend des moyens de guidage de la soupape 140 en translation. Ces moyens empêchent la soupape 140 de tourner autour de son axe de déplacement X100. Ils sont notamment avantageux dans le cas où l'élément obturateur 145 est un simple bouchon, c'est-à-dire dans le cas où l'élément obturateur 145 ne s'étend pas sur toute la périphérie, car ils garantissent alors que l'élément obturateur 145 reste bien radialement en regard du passage 127.

A titre de variante non représentée, applicable à tous les modes de réalisation de l'invention, un mécanisme de verrouillage du raccord en position accouplée autre que les billes 268 peut être utilisé. Par exemple, il est possible d'utiliser un mécanisme de verrouillage à baïonnette.

Selon une autre variante non représentée, applicable à tous les modes de réalisation, le raccord peut comporter un nombre de passages fluidiques coaxiaux strictement supérieurs à deux. Par exemple, un raccord peut comprendre plusieurs étages de passage coaxiaux.

Selon une autre variante non représentée, applicable à tous les modes de réalisation, les éléments de raccord mâle ou femelle peuvent être montés directement sur l'outil ou sur la pompe hydraulique.

Selon une autre variante non représentée, applicable à tous les modes de réalisation, les canalisations C11 et C12 et/ou C21 et C22 peuvent ne pas avoir de structure coaxiale mais relier des lignes de flexibles parallèles d'alimentation et de retour, au raccord, de façon à déboucher dans des passages interne et externe coaxiaux. Ce type de configuration d'installation, dite double ligne, reste prévue par l'invention et compatible avec le fonctionnement coaxial.

Selon une autre variante non représentée, applicable à tous les modes de réalisation, la partie coaxiale interne 102.2 du corps avant comporte une seule ouverture proximale 126 et une seule ouverture distale 130.

Selon une autre variante non représentée, applicable au premier mode de réalisation, le tiroir 110 comporte un nombre d'ergots 112 différent, par exemple deux.

Selon une autre variante non représentée, applicable à tous les modes de réalisation, la partie coaxiale interne 204.2 du corps 204 ne comporte qu'une seule ouverture proximale 280 et qu'une seule ouverture distale 282.

Selon une autre variante non représentée, applicable à tous les modes de réalisation, les parties coaxiales du corps mâle ou les parties coaxiales du corps femelle ne sont pas attenantes. Plus généralement, le corps de l'élément mâle ou femelle peut ne pas être formé en un seul bloc, mais comporter plusieurs pièces liées les unes aux autres, notamment par vissage. Les pièces du corps mâle ou femelle délimitent alors conjointement un passage de liaison entre les passages externes des éléments mâle et femelle en phase accouplée du raccord 1.

Selon une autre variante non représentée, applicable au premier mode de réalisation, les ergots 112 sont disposés sur la face avant de la douille 204.12 de la partie coaxiale externe 204.1 du corps femelle 204. Cette douille 204.12 définit alors, avec le tiroir mâle 110, un passage radial de fluide, qui s'étend de manière périphérique autour de l'axe X100 ou X200 entre les ergots 112.

Selon une autre variante non représentée, applicable à tous les modes de réalisation, le raccord peut disposer de plusieurs passages de liaison rectilignes et parallèles à l'axe X100 ou X200, qui sont répartis de manière périphérique autour de l'axe X100 ou X200, chacun entre une ouverture distale et une ouverture proximale, tel qu'un ensemble de canaux parallèles.

Selon une autre variante non représentée, applicable à tous les modes de réalisation, l'élément mâle peut être monté sur le flexible relié à la pompe et l'élément femelle peut être monté sur le flexible relié à l'outil.

Selon une autre variante non représentée, applicable à tous les modes de réalisation, la partie coaxiale interne 204.2 de l'élément femelle 200 est pourvue d'une ou plusieurs ouvertures, chacune apte à mettre en communication les passages interne et externe de l'élément femelle 200 en position accouplée et à mettre en communication les passages internes 108 et 208 des deux éléments de raccord en position accouplée. Accessoirement, le tiroir femelle 210 peut disposer du joint interne 214 sur sa surface interne mais ne plus disposer du joint d'étanchéité 215 selon cette autre variante.

Les caractéristiques techniques des variantes et modes de réalisation envisagés ci-dessus peuvent être combinées entre elles pour générer de nouveaux modes de réalisation de l'invention et conformément aux revendications 1 à 15.

## Revendications

1. Raccord fluidique (1 ; 1' ; 1") pour la jonction amovible de deux canalisations (C1, C2), comprenant un élément mâle (100 ; 100' ; 100") qui comporte :
- un corps mâle (104 ; 104' ; 104",), comprenant deux parties coaxiales (104.1, 104.2 ; 104.2' ; 104.2",) définissant un passage interne (108,) et un passage externe (106 ; 106',), et
- un tiroir mâle (110 ; 110' ; 110"), qui est mobile axialement à l'intérieur du passage externe entre une position désaccouplée du raccord, où il obture de manière étanche une embouchure distale (E106) du passage externe, et une position accouplée, où il ne s'oppose pas au passage du fluide dans l'embouchure (E106),
et un élément femelle complémentaire (200 ; 200") qui comporte :
- un corps femelle (204 ; 204"), comprenant deux parties coaxiales (204.1 ; 204.1", 204.2) définissant un passage interne (208) et un passage externe (206), et
- un tiroir femelle (210 ; 210"), qui est mobile axialement à l'intérieur du passage externe entre une position désaccouplée du raccord, où il obture de manière étanche une embouchure distale (E206) du passage externe, et une position accouplée, où il ne s'oppose pas au passage du fluide dans l'embouchure (E206), le tiroir mâle (110; 110'; 110") et le tiroir femelle (210 ; 210") étant respectivement poussés par le corps femelle (204 ; 204") et par le corps mâle (104 ; 104' ; 104") lors de l'accouplement,
**caractérisé en ce que** :
- le corps mâle (104 ; 104' ; 104") délimite un passage (128 ; 128') de liaison entre le passage externe (206 ; 206") de l'élément femelle et le passage externe (106 ; 106') de l'élément mâle lors de l'accouplement des éléments, ce passage de liaison s'étendant entre au moins une ouverture distale (130) et au moins une ouverture proximale (126 ; 126'), qui sont délimitées dans une partie coaxiale interne (104.1 ; 104.1') du corps mâle et qui débouchent chacune dans le passage externe (106) de l'élément mâle,
- le tiroir mâle (110 ; 110' ; 110") comporte, sur une surface interne (S110i), un joint d'étanchéité interne (114) qui est en appui contre la surface extérieure (S104.2e) de la partie coaxiale interne (104.2 ; 104.2') du corps mâle dans les positions accouplée et désaccouplée,
- en position désaccouplée, le joint d'étanchéité interne (114) prend appui sur le corps mâle à l'avant de chaque ouverture distale (130), et
- en position accouplée, le joint d'étanchéité interne (114) prend appui sur le corps mâle à l'arrière de chaque ouverture distale,
ou **en ce que** :
- le corps femelle (204") délimite un passage (228) de liaison entre le passage externe (206") de l'élément femelle (200") et le passage externe ('106") de l'élément mâle (100") lors de l'accouplement des éléments, ce passage de liaison s'étendant entre au moins une ouverture distale (230) et au moins une ouverture proximale (226), qui sont délimitées dans une partie coaxiale externe (204.12") du corps femelle et qui débouchent chacune dans le passage externe (206") de l'élément femelle,
- le tiroir femelle (210") comporte, sur une surface externe, un joint d'étanchéité externe (211) qui est en appui contre une surface intérieure (S204.13i) de la partie coaxiale externe du corps femelle dans les positions accouplée et désaccouplée,
- en position désaccouplée, le joint d'étanchéité externe (211) prend appui sur le corps femelle à l'avant de chaque ouverture distale (230), et
- en position accouplée, le joint d'étanchéité externe (211) prend appui sur le corps femelle à l'arrière de chaque ouverture distale.

2. Raccord (1 ; 1' ; 1") selon la revendication 1, **caractérisé en ce que**, lors de l'accouplement et du désaccouplement :
- le joint d'étanchéité interne (114) de la surface interne (S110i) du tiroir mâle (110 ; 110') en contact avec la surface extérieure (S104.2e) de la partie interne (104.2 ; 104.2') du corps mâle, ou
- le joint d'étanchéité externe (211) de la surface externe du tiroir femelle (210") est en contact étanche avec la surface intérieure (S204.13i) de la partie externe du corps femelle.

3. Raccord (1 ; 1') selon l'une des revendications précédentes, **caractérisé en ce que** la partie coaxiale externe (204.1) du corps femelle (204) a une partie distale (204.12) équipée, sur sa surface interne (S204.12i), d'un joint d'étanchéité (205) qui est en contact avec le corps mâle (104 ; 104') en position accouplée, entre les ouvertures proximale (126 ; 126') et distale (130).

4. Raccord (1) selon l'une des revendications précédentes, **caractérisé en ce que**, en position accouplée, le tiroir mâle (110) et le corps femelle (204) forment, au niveau de leur face avant, un passage radial de fluide entre le passage externe (106) de l'élément mâle et le passage de liaison (128).

5. Raccord (1) selon la revendication 4, **caractérisé en ce que** la face avant du tiroir mâle (110) ou du corps femelle (204) comporte des ergots (112) de contact avec la face avant du corps femelle (204), respectivement du tiroir mâle (110), et **en ce que** le passage radial de fluide s'étend de manière périphérique entre les ergots (112).

6. Raccord (1') selon l'une des revendications 1 à 3, **caractérisé en ce que**, en position accouplée, le joint d'étanchéité interne (114) du tiroir mâle prend appui sur le corps mâle (104.2') à l'arrière de chaque ouverture distale (130) et à l'avant de chaque ouverture proximale (126') et **en ce que** le passage externe (106') de l'élément mâle (100') s'étend à l'intérieur du tiroir mâle (110') vers le passage de liaison (128').

7. Raccord (1 ; 1' ; 1") selon l'une des revendications précédentes, **caractérisé en ce que** la partie coaxiale interne (204.2) du corps femelle est pourvue d'au moins une ouverture radiale distale (282) apte à mettre en communication le passage interne (108) de l'élément mâle avec le passage interne (208) de l'élément femelle en position accouplée.

8. Raccord (1 ; 1' ; 1") selon la revendication 7, **caractérisé en ce que** la partie coaxiale interne (204.2) du corps femelle (204) est pourvue d'au moins une ouverture radiale (280) proximale par rapport à l'ouverture distale (282), apte à mettre en communication les passages interne (208) et externe (206 ; 206") de l'élément femelle en position désaccouplée.

9. Raccord (1 ; 1' ; 1") selon la revendication 8, **caractérisé en ce que**, lors de l'accouplement, le tiroir femelle (210 ; 210") obture la ou chaque ouverture radiale proximale (280) de la partie coaxiale interne (204.2) du corps femelle et libère la ou chaque ouverture radiale distale (282) de la partie coaxiale interne du corps femelle.

10. Raccord selon l'une des revendications 1 à 6, **caractérisé en ce que** la partie coaxiale interne (204.2) du corps femelle (204) est pourvue d'au moins une ouverture, apte à mettre en communication les passages interne (208) et externe (206) de l'élément femelle en position désaccouplée et à mettre en communication les passages internes des deux éléments de raccord (100, 200) en position accouplée.

11. Raccord (1 ; 1' ; 1") selon l'une des revendications précédentes, **caractérisé en ce que** :
- l'élément mâle (100) comprend, en outre, une soupape centrale (140) mobile dans le passage interne (108) de l'élément mâle et ayant un corps de soupape (142),
- le corps de soupape (142) est en contact étanche avec le corps mâle (104 ; 104') en position désaccouplée, et
- le contact étanche entre le corps de soupape (142) et le corps mâle est rompu à l'accouplement.

12. Raccord (1 ; 1' ; 1") selon l'une des revendications précédentes, **caractérisé en ce que** l'élément mâle est équipé d'un organe de purge (150), qui est maintenu élastiquement en contact étanche contre une embouchure distale du passage interne (108) et qui est accessible depuis l'environnement extérieur pour libérer le passage interne vers l'extérieur.

13. Raccord selon l'une des revendications précédentes, **caractérisé en ce que** la partie coaxiale interne (104.2) du corps mâle (104) délimite au moins un passage de dépressurisation (127) apte à mettre en communication les passages interne (108) et externe (106) de l'élément mâle (100) en position désaccouplée du raccord.

14. Raccord selon la revendication 13, **caractérisé en ce que** le passage de dépressurisation (127) débouche dans le passage de liaison (128) délimité par le corps mâle (104).

15. Raccord selon la revendication 13 ou 14, **caractérisé en ce que** l'élément mâle comprend, en outre, une soupape centrale (140) mobile dans le passage interne (108) de l'élément mâle (100) et **en ce que** la soupape centrale (140) obture le passage de dépressurisation (127) en position accouplée du raccord.

## Patentansprüche

1. Fluidkupplung (1; 1'; 1") für die lösbare Verbindung von zwei Leitungen (C1, C2), umfassend ein Einsteckelement (100; 100' 100"), das aufweist:
- einen Einsteckkörper (104; 104'; 104"), der zwei, einen Innenkanal (108) und einen Außenkanal (106; 106') begrenzende koaxiale Teile (104.1, 104.2; 104.2'; 104.2") umfasst, und
- ein Einsteckschubelement (110; 100'; 110"), das axial im Inneren des Außenkanals zwischen einer entkoppelten Stellung der Kupplung, in der es in abdichtender Weise eine distale Einmündung (E106) des Außenkanals verschließt, und einer gekuppelten Stellung, in der es sich nicht dem Durchgang des Fluids in die Einmündung (E106) entgegenstellt, beweglich ist,
und ein komplementäres Aufnahmeelement (200;200"), das aufweist:
- einen Aufnahmekörper (204; 204"), der zwei einen Innenkanal (108) und einen Außenkanal (206) begrenzende koaxiale Teile (204.1; 204.1", 204.2) umfasst, und
- ein Aufnahmeschubelement (210; 2010"), das axial im Inneren des Außenkanals zwischen einer entkoppelten Position der Kupplung, in der es in abdichtender Weise eine distale Einmündung (E206) des Außenkanals verschließt, und einer gekuppelten Stellung, in der es sich nicht dem Durchgang des Fluids in die Einmündung (E206) entgegenstellt, beweglich ist, wobei das Einsteckschubelement (110; 110'; 110") und das Aufnahmeschubelement (210; 210") bei dem Kuppelvorgang jeweils von dem Aufnahmekörper (204; 204") und von dem Einsteckkörper (104; 104'; 104") geschoben werden,
**dadurch gekennzeichnet, dass**:
- der Einsteckkörper (104; 104'; 104") einen Verbindungskanal (128; 128') zwischen dem Außenkanal (206; 206") des Aufnahmeelements und dem Außenkanal (106; 106') des Einsteckelements bei dem Kuppelvorgang der Elemente begrenzt, wobei dieser Verbindungskanal sich zwischen mindestens einer distalen Öffnung (130) und mindestens einer proximalen Öffnung (126; 126') erstreckt, die in einem inneren koaxialen Teil (104.1; 104.1') des Einsteckelements begrenzt sind und die jeweils in den Außenkanal (106) des Einsteckelements münden,
- das Einsteckschubelement (110; 110'; 110") auf einer Innenfläche (S110i) eine Innendichtung (114) aufweist, die in der gekuppelten und der entkuppelten Stellung an der Außenfläche (S104.2e) des koaxialen inneren Teils (104.2; 104.2') des Einsteckkörpers anliegt,
- in der entkuppelten Stellung die Innendichtung (114) an dem Einsteckkörper vor jeder distalen Öffnung (130) anliegt, und
- in der gekuppelten Stellung die Innendichtung (114) an dem Einsteckkörper hinter jeder distalen Öffnung anliegt,
oder dass:
- der Aufnahmekörper (204") einen Verbindungskanal (228) zwischen dem Außenkanal (206") des Aufnahmeelements (200") und dem Außenkanal (106") des Einsteckelements (100") bei dem Kuppelvorgang der Elemente begrenzt, wobei dieser Verbindungskanal sich zwischen mindestens einer distalen Öffnung (230) und mindestens einer proximalen Öffnung (226) erstreckt, die in einem äußeren koaxialen Teil (204.12") des Aufnahmekörpers begrenzt sind und die jeweils in den Außenkanal (206") des Aufnahmeelements münden,
- das Aufnahmeschubelement (210") auf einer Außenfläche eine Außendichtung (211) aufweist, die an einer Innenfläche (S204.13i) des äußeren koaxialen Teils des Aufnahmekörpers in der gekuppelten und der entkuppelten Stellung anliegt,
- in der entkuppelten Stellung die Außendichtung (211) an dem Aufnahmekörper vor jeder distalen Öffnung (230) anliegt, und
- in der gekuppelten Stellung die Außendichtung (211) an dem Aufnahmekörper hinter jeder distalen Öffnung anliegt.

2. Kupplung (1; 1'; 1") nach Anspruch 1, **dadurch gekennzeichnet, dass** bei dem Kuppelvorgang und dem Entkuppelvorgang :
- die Innendichtung (114) der Innenfläche (S110i) des Einsteckschubelements (110; 110') in Kontakt mit der Außenfläche (S104.2e) des inneren Teils (104.2; 104.2') des Einsteckkörpers ist, oder
- die Außendichtung (211) der Außenfläche des Aufnahmeschubelements (210") in Kontakt mit der Innenfläche (S204.13i) des äußeren Teils des Aufnahmekörpers ist.

3. Kupplung (1; 1') nach einem der vorhergehenden Ansprüche, **dadurch gekennzeichnet, dass** das äußere koaxiale Teil (204.1) des Aufnahmekörpers (204) ein distales Teil (204.12) aufweist, das auf seiner Innenfläche (S204.12i) mit einem Dichtungselement (205) ausgerichtet ist, das in der gekuppelten Stellung zwischen der proximalen Öffnung (126; 126') und der distalen Öffnung (130) in Kontakt mit dem Einsteckkörper (104; 104') ist.

4. Kupplung (1) nach einem der vorhergehenden Ansprüche, **dadurch gekennzeichnet, dass** in der gekuppelten Stellung das Einsteckschubelement (110) und der Aufnahmekörper (204) an ihrer Vorderfläche einen radialen Fluiddurchgang zwischen dem Außenkanal (106) des Einsteckelements und dem Verbindungskanal (128) bilden.

5. Kupplung (1) nach Anspruch 4, **dadurch gekennzeichnet, dass** die Vorderfläche des Einsteckschubelements (110) oder des Aufnahmekörpers (204) Ansätze (112) für einen Kontakt mit der Vorderfläche des Aufnahmekörpers (204) respektive des Einsteckschubelements (110) aufweist und dass der radiale Fluiddurchgang sich in umfänglicher Weise zwischen den Ansätzen (112) erstreckt.

6. Kupplung (1') nach einem der Ansprüche 1 bis 3, **dadurch gekennzeichnet, dass** in der gekuppelten Stellung die Innendichtung (114) des Einsteckschubelements an dem Einsteckkörper (104.2') hinter jeder distalen Öffnung (130) und vor jeder proximalen Öffnung (126') anliegt und dass der Außenkanal (106') des Einsteckelements (100') sich im Inneren des Einsteckschubelements (110') zu dem Verbindungskanal (128') erstreckt.

7. Kupplung (1; 1'; 1") nach einem der vorhergehenden Ansprüche, **dadurch gekennzeichnet, dass** das innere koaxiale Teil (204.2) des Aufnahmekörpers mit mindestens einer distalen radialen Öffnung (282) versehen ist, die geeignet ist, in der gekuppelten Stellung den Innenkanal (108) des Einsteckelements mit dem Innenkanal (108) des Aufnahmeelements in Verbindung zu setzen.

8. Kupplung (1; 1'; 1") nach Anspruch 7, **dadurch gekennzeichnet, dass** das innere koaxiale Teil (204.2) des Aufnahmekörpers (204) mit mindestens einer in Bezug auf die distale Öffnung (282) proximalen radialen Öffnung versehen ist, die geeignet ist, in der entkuppelten Stellung den Innenkanal (208) und Außenkanal (206; 206") des Aufnahmeelements in Verbindung zu setzen.

9. Kupplung (1; 1'; 1") nach Anspruch 8, **dadurch gekennzeichnet, dass** bei dem Kuppelvorgang das Aufnahmeschubelement (210; 10") die oder jede proximale radiale Öffnung (280) des inneren koaxialen Teils (204.2) des Aufnahmekörpers verschließt und die oder jede distale radiale Öffnung (282) des inneren koaxialen Teils des Aufnahmekörpers freigibt.

10. Kupplung nach einem der Ansprüche 1 bis 6, **dadurch gekennzeichnet, dass** das innere koaxiale Teil (204.2) des Aufnahmekörpers (204) mit mindestens einer Öffnung versehen ist, die geeignet ist, in der entkuppelten Stellung den Innenkanal (208) und Außenkanal (206)des Aufnahmeelements in Verbindung zu setzen und in der gekuppelten Stellung die Innenkanäle der zwei Kupplungselemente (100, 200) in Verbindung zu setzen.

11. Kupplung (1; 1'; 1") nach einem der vorhergehenden Ansprüche, **dadurch gekennzeichnet, dass**:
- das Einsteckelement (100) außerdem ein zentrales bewegliches Ventil (140) in dem Innenkanal (108) des Einsteckelements umfasst, das einen Ventilkörper (142) aufweist,
- der Ventilkörper (142) in der entkuppelten Stellung in abdichtendem Kontakt mit dem Einsteckkörper (104; 104') Stellung ist und
- der abdichtende Kontakt zwischen dem Ventilkörper (142) und dem Einsteckkörper bei dem Kuppelvorgang unterbrochen wird.

12. Kupplung (1; 1'; 1") nach einem der vorhergehenden Ansprüche, **dadurch gekennzeichnet, dass** das Einsteckelement mit einem Auslasselement (150) ausgerüstet ist, das elastisch in abdichtendem Kontakt gegen eine distale Einmündung des Innenkanals (108) gehalten wird und das von der Außenumgebung zugänglich ist, um den Innenkanal nach außen freizugeben.

13. Kupplung nach einem der vorhergehenden Ansprüche, **dadurch gekennzeichnet, dass** das innere koaxiale Teil (104.2) des Einsteckkörpers (104) mindestens einen Druckentlastungskanal (127) begrenzt, der geeignet ist, den Innenkanal (108) und den Außenkanal (106) des Einsteckelements (110) in der entkuppelten Stellung der Kupplung in Verbindung zu setzen.

14. Kupplung nach Anspruch 13, **dadurch gekennzeichnet, dass** der Druckentlastungskanal (127) in den Verbindungskanal (128) mündet, der von dem Einsteckkörper (104) begrenzt ist.

15. Kupplung nach Anspruch 13 oder 14, **dadurch gekennzeichnet, dass** das Einsteckelement außerdem ein zentrales bewegliches Ventil (140) in dem Innenkanal (108) des Einsteckelements (100) umfasst und dass das zentrale Ventil (140) den Druckentlastungskanal (127) in der gekuppelten Stellung der Kupplung verschließt.

## Claims

1. A fluid connector (1; 1'; 1") for removably joining two lines (C1, C2), comprising a male element (100; 100'; 100") that includes:
- a male body (104; 104'; 104"), comprising two coaxial parts (104.1, 104.2; 104.2'; 104.2") defining an inner passage (108) and an outer passage (106; 106'), and
- a male drawer (110; 110'; 110"), which is axially movable inside the outer passage between an uncoupled position of the connector, where it tightly closes off a distal mouth (E106) of the outer passage, and a coupled position, where it does not oppose the passage of fluid in the mouth (E106),
and a complementary female element (200; 200") that includes:
- a female body (204; 204"), comprising two coaxial parts (204.1; 204.1", 204.2) defining an inner passage (208) and an outer passage (206), and
- a female drawer (210; 210"), which is axially movable inside the outer passage between an uncoupled position of the connector, where it tightly closes off a distal mouth (E206) of the outer passage, and a coupled position, where it does not oppose the passage of the fluid in the mouth (E206), the male drawer (110; 110'; 110") and the female drawer (210; 210") respectively being pushed by the female body (204; 204") and by the male body (104; 104'; 104") during coupling,
**characterized in that**:
- the male body (104; 104'; 104") delimits a connecting passage (128; 128') between the outer passage (206; 206") of the female element and the outer passage (106; 106") of the male element during the coupling of the elements, the connecting passage extending between at least one distal opening (130) and at least one proximal opening (126; 126'), which are delimited in an inner coaxial part (104.1; 104.1') of the male body and which each emerge in the outer passage (106) of the male element,
- the male drawer (110; 110'; 110") includes, on an inner surface (S110i), an inner sealing gasket (114) that bears against the outer surface (S104.2e) of the inner coaxial part (104.2; 104.2') of the male body in the coupled and uncoupled positions,
- in the uncoupled position, the inner sealing gasket (114) bears on the male body in front of each distal opening (130), and
- in the coupled position, the inner sealing gasket (114) bears on the male body behind each distal opening,
or **in that**:
- the female body (204") delimits a connecting passage (228) between the outer passage (206") of the female element (200") and the outer passage (106") of the male element (100") during the coupling of the elements, the connecting passage extending between at least one distal opening (230) and at least one proximal opening (226), which are delimited in an outer coaxial part (204.12") of the female body and which each emerge in the outer passage (206") of the female element,
- the female drawer (210") includes, on an outer surface, an outer sealing gasket (211) that bears against an inner surface (S204.13i) of the outer coaxial part of the female body in the coupled and uncoupled positions,
- in the uncoupled position, the outer sealing gasket (211) bears on the female body in front of each distal opening (230), and
- in the coupled position, the outer sealing gasket (211) bears on the female body behind each distal opening.

2. The connector (1; 1'; 1") according to claim 1, **characterized in that**, during coupling and uncoupling:
- the inner sealing gasket (114) of the inner surface (S110i) of the male drawer (110; 110') [is] in tight contact with the outer surface (S104.2e) of the inner part (104.2; 104.2') of the male body, or
- the outer sealing gasket (211) of the outer surface of the female drawer (210") is in tight contact with the inner surface (S204.13i) of the sleeve (204.13) of the outer part of the female body.

3. The connector (1; 1') according to one of the preceding claims, **characterized in that** the outer coaxial part (204.1) of the female body (204) has a distal part (204.12) equipped, on its inner face (S204.12i), with a sealing gasket (205) that is in contact with the male body (104; 104') in the coupled position, between the proximal (126; 126') and distal (130) openings.

4. The connector (1) according to one of the preceding claims, **characterized in that**, in the coupled position, the male drawer (110) and the female body (204) form, at their front face, a radial fluid passage between the outer passage (106) of the male element and the connecting passage (128).

5. The connector (1) according to claim 4, **characterized in that** the front face of the male drawer (110) or the female body (204) includes contact lugs (112) with the front face of the female body (204), the male drawer (110), respectively, and **in that** the radial fluid passage extends peripherally between the lugs (112).

6. The connector (1') according to one of claims 1 to 3, **characterized in that**, in the coupled position, the inner sealing gasket (114) of the male drawer bears on the male body (104.2') behind each distal opening (130) and in front of each proximal opening (126'), and **in that** the outer passage (106') of the male element (100') extends inside the male drawer (110') toward the connecting passage (128').

7. The connector (1; 1'; 1") according to one of the preceding claims, **characterized in that** the inner coaxial part (204.2) of the female body is provided with at least one distal radial opening (282) able to place the inner passage (108) of the male element in communication with the inner passage (208) of the female element in the coupled position.

8. The connector (1; 1'; 1") according to claim 7, **characterized in that** the inner coaxial part (204.2) of the female body (204) is provided with at least one proximal radial opening (280) relative to the distal opening (282), able to put the inner (208) and outer (206; 206") passages of the female element in communication in the uncoupled position.

9. The connector (1; 1'; 1") according to claim 8, **characterized in that**, during coupling, the female drawer (210; 210") closes off the or each proximal radial opening (280) of the inner coaxial part (204.2) of the female body and frees the or each distal radial opening (282) of the inner coaxial part of the female body.

10. The connector according to one of claims 1 to 6, **characterized in that** the inner coaxial part (204.2) of the female body (204) is provided with at least one opening, able to place the inner (208) and outer (206) passages of the female element in communication in the uncoupled position and place the inner passages of the two connector elements (100, 200) in communication in the coupled position.

11. The connector (1; 1'; 1") according to one of the preceding claims, **characterized in that**:
- the male element (100) further comprises a central valve (140) movable in the inner passage (108) of the male element and having a valve body (142),
- the valve body (142) is in tight contact with the male body (104; 104') in the uncoupled position, and
- the tight contact between the valve body (142) and the male body being broken upon coupling.

12. The connector (1; 1'; 1") according to one of the preceding claims, **characterized in that** the male element is equipped with a bleed member (150), which is elastically kept in tight contact against a distal mouth of the inner passage (108) and which is accessible from the outside environment to free the inner passage to the outside.

13. The connector according to one of the preceding claims, **characterized in that** the inner coaxial part (104.2) of the male body (104) defines at least one proximal depressurization passage (127) able to put the inner (108) and outer (106) passages of the male element (100) in communication in the uncoupled position of the connector.

14. The connector according to claim 13, **characterized in that** the depressurization passage (127) emerges in the connecting passage (128) defined by the male body (104).

15. The connector according to claim 13 or 14, **characterized in that** the male element further comprises a central valve (140) movable in the inner passage (108) of the male element (100) and **in that** the central valve (140) closes off the depressurization passage (127) in the coupled position of the connector.
